(19) Europäisches Patentamt / European Patent Office / Office européen des brevets

(11) **EP 2 633 900 A1**

(12) **EUROPEAN PATENT APPLICATION**
published in accordance with Art. 153(4) EPC

(43) Date of publication:
**04.09.2013 Bulletin 2013/36**

(51) Int Cl.:
**B01D 67/00** (2006.01)

(21) Application number: **11836477.7**

(22) Date of filing: **28.10.2011**

(86) International application number:
**PCT/JP2011/075009**

(87) International publication number:
**WO 2012/057344 (03.05.2012 Gazette 2012/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.08.2011 JP 2011176720**
**04.08.2011 JP 2011170999**
**12.07.2011 JP 2011153646**
**30.03.2011 JP 2011076244**
**29.10.2010 JP 2010243853**

(72) Inventors:
• **HIRAOKA Kotaro**
**Otake-shi**
**Hiroshima 739-0693 (JP)**
• **SUMI Toshinori**
**Otake-shi**
**Hiroshima 739-0693 (JP)**
• **FUJIKI Hiroyuki**
**Otake-shi**
**Hiroshima 739-0693 (JP)**

(71) Applicant: **Mitsubishi Rayon Co., Ltd.**
**Tokyo 100-8253 (JP)**

(74) Representative: **HOFFMANN EITLE**
**Patent- und Rechtsanwälte**
**Arabellastrasse 4**
**81925 München (DE)**

(54) **WASHING APPARATUS, AND PROCESS FOR PRODUCING POROUS MEMBRANE**

(57) The present invention relates to a method of producing a porous membrane, including a coagulation step of coagulating a membrane-forming raw material solution to form a porous membrane; a washing step of washing the porous membrane to remove material remaining in the porous membrane; a removal step of removing a hydrophilic polymer remaining in the porous membrane, in which the washing step includes transporting a porous membrane so as to contact with a falling washing solution. The present invention relates to a washing apparatus that washes a porous membrane, obtained by coagulating a membrane-forming raw material solution, the washing apparatus including fall means for causing a washing solution to fall; and transport means for transporting a porous membrane so as to contact with a falling washing solution. According to the present invention, it is possible to provide a method of producing a porous membrane capable of efficiently removing a solvent from a porous membrane within a short period of time at a low cost without large facilities; and a washing apparatus used for the production process.

FIG. 1

EP 2 633 900 A1

## Description

Technical Field

The present invention relates to a washing apparatus that washes a porous membrane, and a method of producing a porous membrane.

Priority is claimed on Japanese Patent Application No. 2010-243853, filed October 29, 2010, Japanese Patent Application No. 2011-076244, filed March 30, 2011, Japanese Patent Application No. 2011-153646, filed July 12, 2011, Japanese Patent Application No. 2011-170999, filed August 4, 2011, and Japanese Patent Application No. 2011-176720, filed August 12,2011, the contents of which are incorporated herein by reference.

Background Art

In recent years, along with an increased interest in environmental contamination and tighter regulations, a method of using a filtration membrane having superior properties such as complete separation property and compactness has attracted attention as a water treatment method.

As a method of producing a porous membrane used as the filtration membrane, a non-solvent phase separation method is known in which a non-solvent phase separation phenomenon of phase-separating a polymer solution to obtain pores or a phase separation phenomenon of phase-separating a polymer solution to obtain pores without further adding a solvent is used.

As the non-solvent phase-separation method, a wet or dry-wet spinning method (hereinafter, both methods will be collectively referred to as "wet spinning method") is known. According to this method, the flow rate of a filtration is high and a satisfactory partition layer is obtained, thereby easily obtaining a porous membrane suitable for the treatment of a large amount of water.

When a porous membrane is produced using such a wet spinning method, first, a membrane-forming raw material solution containing a hydrophobic polymer, a hydrophilic polymer, and a solvent is prepared. Then, this membrane-forming raw material solution is discharged in a circular shape, a porous membrane is formed in a coagulation step of coagulating the solution in a coagulation liquid, and the porous membrane is dried in a drying step. The membrane-forming raw material solution may be introduced into the coagulating liquid through a free-running portion in contact with the air (dry-wet spinning method) or may be directly introduced into the coagulating liquid (wet spinning method).

However, in a porous membrane obtained at this time, generally, a hydrophilic polymer and a solvent remain in a porous portion thereof. In particular, when a hydrophilic polymer remains therein, water permeability, which is one of the important properties required for a porous membrane, is insufficient. Therefore, between the coagulation step and the drying step, a step of washing a porous membrane to remove a solvent and a step of, for example, dissolving and washing a hydrophilic polymer to remove it from a porous membrane are required to be performed in order to obtain a porous membrane having high water permeability.

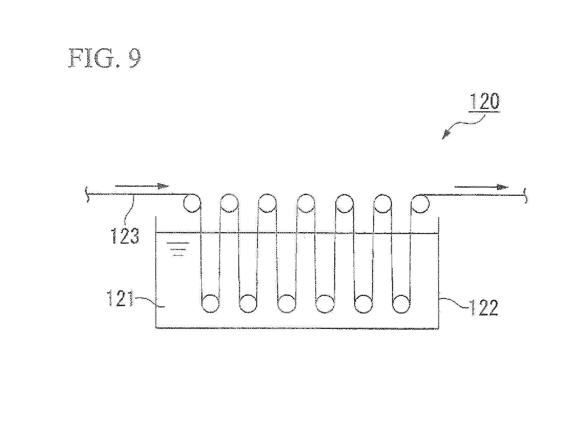

As a method of removing a solvent, there is a method in which a porous membrane 123 is transported into a washing tank 122, in which hot water 121 is stored, to wash the porous membrane 123, for example, using a washing apparatus 120 as illustrated in FIG. 9.

However, in this method, a solvent in a porous membrane is diffused and transferred into a membrane surface from the inside of the membrane and is further diffused and transferred into a washing bath from the membrane surface to remove the solvent from the porous membrane, which generally requires a long period of time. In order to reduce the washing time, it is preferable that the temperature of hot water as the washing solution be increased to increase the diffusion rate of a solvent. However, there is a limit of 100°C during normal washing under normal pressure. In order to increase the temperature to higher than 100°C, it is necessary that washing be performed under increased pressure or that an additive be added to the washing solution to increase the boiling point.

However, since it is necessary that a washing tank be sealed during washing under increased pressure, the size of facilities is increased. Meanwhile, in the method using an additive, since an additive may be attached to a porous membrane, an additional step of removing the additive after washing is necessary.

In addition, when a solvent is removed from a porous membrane, a relationship between a residual solvent concentration of a solvent contained in a porous membrane and an elution solvent concentration of a washing solution near a membrane surface is important. That is, when the elution solvent concentration is lower than the residual solvent concentration, the diffusion of a solvent from a membrane surface into a washing solution is promoted.

However, in a method, of the related art, the diffusion of a solvent from a porous membrane into a washing solution advances over time, the elution solvent concentration becomes higher than the residual solvent concentration, and thus it is difficult for the solvent to be diffused into the washing solution. Therefore, it is necessary that the washing time be increased and a washing solution in a washing tank be replaced with a new one. However, the drying step is continuously performed after the coagulation step; therefore, particularly when a washing solution is replaced with a new one, the operation should be stopped.

Therefore, as a solvent removal method having high economic efficiency, for example, PTL 1 discloses a method of inclining two or more gutter-shaped washing baths, through which a washing solution flows, by 1° to 3° and arranging them in a zigzag shape; and transporting a porous membrane into the washing baths such that a flowing direction of the washing solution and a transporting direction of the porous membrane in the washing baths are the same and such that the porous membrane follows the inclination of the washing baths, thereby washing the porous membrane in the washing baths.

Citation List

Patent Literature

[PTL 1] Japanese Unexamined Patent Application, First Publication No. 2008-237987

Summary of Invention

Technical Problem

However, when a solvent is removed from a porous membrane using the washing method disclosed in PTL 1, it is necessary that the number of the washing baths be increased in order to increase the washing efficiency, which leads to an increase in the size of facilities.

In addition, since the washing baths are inclined by 1° to 3°, there is a limit in the rate of the washing solution flowing through the inside of the washing baths. Therefore, sufficient washing efficiency cannot be always obtained.

The present invention has been made in consideration of such circumstances, and an object thereof is to provide a method of producing a porous membrane capable of efficiently removing a solvent from a porous membrane within a short period of time at a low cost without requiring large facilities, and a washing apparatus suitably used for the production process.

Solution to Problem

According to an aspect of a washing apparatus of the present invention, a washing apparatus is provided which washes a porous membrane, obtained by coagulating a membrane-forming raw material solution containing a hydrophobic polymer, a hydrophilic polymer, and a solvent in a coagulating solution, to remove a solvent remaining in the porous membrane, the washing apparatus including: fall means for causing a washing solution to fall; and transport means for transporting a porous membrane so as to contact with a falling washing solution.

In addition, it is preferable that the transport means transport a porous membrane in the same direction as and/or the opposite direction to a falling direction of a washing solution.

Furthermore, it is preferable that the transport means include a pair of cylindrical rotors and move a porous membrane in axis directions of the pair of cylindrical rotors while reciprocating the porous membrane between the pair of cylindrical rotors.

It is preferable that the transport means transport a porous membrane such that the porous membrane is washed with a washing solution falling in the vertical direction.

In addition, according to an aspect of a method of producing a porous membrane of the present invention, a method of producing a porous membrane is provided, including: a coagulation step of coagulating a membrane-forming raw material solution, which contains a hydrophobic polymer, a hydrophilic polymer, and a solvent, in a coagulating solution to form a porous membrane; a washing step of washing the porous membrane to remove a solvent remaining in the porous membrane; a removal step of removing a hydrophilic polymer remaining in the porous membrane; and a drying step of drying the porous membrane, in which the washing step includes transporting a porous membrane so as to contact with a falling washing solution.

According to another aspect of the method of producing a porous membrane of the present invention, the washing step is a step of washing a porous membrane, which is being transported, with a washing solution falling in the vertical direction.

Furthermore, it is preferable that the washing step include transporting the porous membrane in the same direction as and/or the opposite direction to the falling direction of the washing solution.

In addition, it is preferable that the washing step include moving a porous membrane in axis directions of a pair of cylindrical rotors while reciprocating the porous membrane between the pair of cylindrical rotors.

According to still another aspect of the washing apparatus of the present invention, a washing apparatus is provided which washes a porous membrane, obtained by coagulating a membrane-forming raw material solution containing a hydrophobic polymer, a hydrophilic polymer, and a solvent in a coagulating solution, the washing apparatus including: fall means for causing a washing solution to fall; and transport means for transporting a porous membrane so as to contact with a falling washing solution, in which the transport means includes two or more cylindrical rotors, which are arranged in a zigzag shape, and moves a porous membrane from an upstream cylindrical rotor to a downstream cylindrical rotor while reciprocating the porous membrane between the cylindrical rotors.

In this configuration, it is preferable that the transport means transport a porous membrane in the same direction and/or the opposite direction to a falling direction of a washing solution.

Alternatively, it is preferable that the transport means transport a porous membrane in a direction perpendicular to a falling direction of a washing solution.

It is preferable that the transport means transport a porous membrane such that the porous membrane is washed with a washing solution falling in the vertical direction.

In addition, according to another aspect of the method of producing a porous membrane of the present invention, a method of producing a porous membrane is provided, including: a coagulation step of coagulating a membrane-forming raw material solution, which contains a hydrophobic polymer, a hydrophilic polymer, and a solvent, in a coagulating solution to form a porous membrane; a washing step of washing the porous membrane to remove a solvent remaining in the porous membrane; and a removal step of removing a hydrophilic polymer remaining in the porous membrane, in which the washing step includes transporting a porous membrane so as to contact with a falling washing solution and moving the porous membrane from an upstream cylindrical rotor to a downstream cylindrical rotor while reciprocating the porous membrane between two or more cylindrical rotors which are arranged in a zigzag shape.

According to another aspect of the method of producing a porous membrane of the present invention, the washing step is a step of washing a porous membrane, which is being transported, with a washing solution falling in the vertical direction.

In this configuration, it is preferable that the washing step include transporting the porous membrane in the same direction as and/or the opposite direction to the falling direction of the washing solution.

Alternatively, it is preferable that the washing step include transporting a porous membrane perpendicular to a falling direction of a washing solution.

According to another aspect of the washing apparatus of the present invention, a washing apparatus is provided which washes a porous membrane, obtained by coagulating a membrane-forming raw material solution containing a hydrophobic polymer, a hydrophilic polymer, and a solvent in a coagulating solution, the washing apparatus including: fall means for causing a washing solution to fall; and transport means for transporting a porous membrane in the same direction as and the opposite direction to a falling direction of a washing solution so as to contact with a falling washing solution, in which the transport means includes a pair of cylindrical rotors, of which axis directions are not parallel to each other, and moves a porous membrane in axis directions of the pair of cylindrical rotors while transporting the porous membrane to reciprocate between the pair of cylindrical rotors.

It is preferable that the transport means transport a porous membrane such that the porous membrane is washed with a washing solution falling in the vertical direction.

In addition, according to another aspect of the method of producing a porous membrane of the present invention, a method of producing a porous membrane is provided, including: a coagulation step of coagulating a membrane-forming raw material solution, which contains a hydrophobic polymer, a hydrophilic polymer, and a solvent, in a coagulating solution to form a porous membrane; a washing step of washing the porous membrane to remove a solvent remaining in the porous membrane; a removal step of removing a hydrophilic polymer remaining in the porous membrane; and a drying step of drying the porous membrane, in which the washing step includes transporting a porous membrane in the same direction as or the opposite direction to a falling direction of a washing solution so as to contact with a falling washing solution and moving the porous membrane in axis directions of a pair of cylindrical rotors, of which axis directions are not parallel to each other, while transporting the porous membrane to reciprocate between the pair of cylindrical rotors.

According to another aspect of the method of producing a porous membrane of the present invention, the washing step is a step of washing a porous membrane, which is being transported, with a washing solution falling in the vertical direction.

According to another aspect of the washing apparatus of the present invention, a washing apparatus is provided which washes a porous membrane, obtained by coagulating a membrane-forming raw material solution containing a hydrophobic polymer, a hydrophilic polymer, and a solvent in a coagulating solution, to remove a solvent remaining in the porous membrane, the washing apparatus including: fall means for causing a washing solution to fall; and transport means for transporting a porous membrane so as to contact with a falling washing solution and such that a falling direction of a washing solution intersects with a transporting direction of a porous membrane, in which the transport means includes a pair of cylindrical rotors and moves a porous membrane in axis directions of the pair of cylindrical rotors while transporting the porous membrane to reciprocate between the pair of cylindrical rotors.

It is preferable that the transport means transport a porous membrane such that the porous membrane is washed with a washing solution falling in the vertical direction.

In addition, according to another aspect of the method of producing a porous membrane of the present invention, a method of producing a porous membrane is provided, including: a coagulation step of coagulating a membrane-forming raw material solution, which contains a hydrophobic polymer, a hydrophilic polymer, and a solvent, in a coagulating solution to form a porous membrane; a washing step of washing the porous membrane to remove a solvent remaining in the porous membrane; a removal step of removing a hydrophilic polymer remaining in the porous membrane; and a drying step of drying the porous membrane, in which the washing step includes transporting a porous membrane so as to contact with a falling washing solution and such that a falling direction of a washing solution intersects with a transporting direction of the porous membrane and moving the porous membrane in axis directions of a pair of cylindrical rotors while transporting the porous membrane to reciprocate between the pair of cylindrical rotors.

According to another aspect of the method of producing porous membrane of the present invention, the washing step is a step of washing a porous membrane, which is being transported, with a washing solution falling in the vertical direction.

According to another aspect of the washing apparatus of the present invention, a washing apparatus is provided which washes a porous membrane, obtained by coagulating a membrane-forming raw material solution containing a hydrophobic polymer, a hydrophilic polymer, and a solvent in a coagulating solution, to remove a solvent remaining in the porous membrane, the washing apparatus including: fall means for causing a washing solution to fall; and transport means for transporting a porous membrane in the same direction as or the opposite direction to falling direction of a washing solution so as to contact with a falling washing solution, in which the fall means includes a flow path through which a washing solution flows and which is obliquely arranged such that a washing solution falls from an end thereof, and the transport means includes a guide member, which restricts the transporting of the porous membrane, at a fall portion to which a washing solution falls from the flow path.

It is preferable that the transport means transport a porous membrane such that the porous membrane is washed with a washing solution falling in the vertical direction.

In addition, it is preferable that the fall means have two or more flow paths.

Furthermore, it is preferable that the two or more flow paths be arranged in a zigzag shape such that a washing solution sequentially falls and moves from one flow path to another flow path.

In addition, according to another aspect of the method of producing a porous membrane of the present invention, a method of producing a porous membrane is provided, including: a coagulation step of coagulating a membrane-forming raw material solution, which contains a hydrophobic polymer, a hydrophilic polymer, and a solvent, in a coagulating solution to form a porous membrane; a washing step of washing the porous membrane to remove a solvent remaining in the porous membrane; a removal step of removing a hydrophilic polymer remaining in the porous membrane; and a drying step of drying the porous membrane, in which the washing step includes transporting a porous membrane in the same direction as or the opposite direction to a falling direction of a washing solution using a guide member, which is provided at a fall portion of the washing solution and restricts the transporting of the porous membrane, such that the porous membrane contacts with the washing solution falling from an end of a flow path through which the washing solution flows.

According to another aspect of the method of producing a porous membrane of the present invention, the washing step is a step of washing a porous membrane, which is being transported, with a washing solution falling in the vertical direction. Furthermore, it is preferable that the washing step include transporting a porous membrane in the same direction as or the opposite direction to a falling direction of a washing solution using transport means, which is provided at fall portions of the washing solution, such that the porous membrane contacts with the washing solution sequentially falling and moving from one to another of two or more flow paths through which the water solution flows.

In addition, it is preferable that the two or more flow paths be arranged in a zigzag shape.

That is, the present invention relates to the following aspects.

(1) A method of producing a porous membrane, including: a coagulation step of coagulating a membrane-forming raw material solution, which contains a hydrophobic polymer, a hydrophilic polymer, and a solvent, in a coagulating solution to form a porous membrane; a washing step of washing the porous membrane to remove material remaining in the porous membrane; a removal step of removing a hydrophilic polymer remaining in the porous membrane; and a drying step of drying the porous membrane, in which the washing step includes transporting the porous membrane so as to contact with a falling washing solution.

(2) The method of producing a porous membrane according to (1), in which the washing step includes transporting the porous membrane parallel to a falling direction of the washing solution.

(3) The method of producing a porous membrane according to (1) or (2), in which the washing step includes transporting the porous membrane so as to contact with the washing solution at a high angle.

(4) The method of producing a porous membrane according to any one of (1) to (3), in which in the washing step, a fall of the washing solution is a free fall.

(5) The method of producing a porous membrane according to any one of (1) to (4), in which the washing step includes transporting the porous membrane in the same direction as or the opposite direction to the falling direction of the washing solution, and in the washing step, when a transporting rate of the porous membrane is represented by V1 and an average movement rate of the washing solution is represented by v2, v2/V1 is higher than or equal to 1.

(6) The method of producing a porous membrane according to any one of (1) to (4), in which the washing step includes transporting the porous membrane in the same direction as the falling direction of the washing solution, and in the washing step, when a transporting rate of the porous membrane is represented by V1 and an average movement rate of the washing solution is represented by v2, v2/V1 is higher than or equal to 2.

(7) The method of producing a porous membrane according to any one of (1) to (4), in which the washing step includes transporting the porous membrane in the opposite direction to the falling direction of the washing solution.

(8) The method of producing a porous membrane according to any one of (1) to (7), in which the washing step includes moving the porous membrane in axis directions of a pair of cylindrical rotors while reciprocating the porous membrane between the pair of cylindrical rotors.

(9) The method of producing a porous membrane according to (1) or any one of (3) to (7), in which the washing step includes transporting a porous membrane so as to contact with the falling washing solution and moving the porous membrane from an upstream cylindrical rotor to a downstream cylindrical rotor while sequentially transporting the porous membrane between two or more cylindrical rotors which are alternately arranged.

(10) The method of producing a porous membrane according to (9), in which the washing step includes transporting the porous membrane parallel to a falling direction of a washing solution.

(11) The method of producing a porous membrane according to (9), in which the washing step includes transporting a porous membrane perpendicular to a falling direction of the washing solution.

(12) The method of producing a porous membrane according to any one of (1) to (7), in which the washing step includes transporting the porous membrane in the same direction as or the opposite direction to a falling direction of the washing solution, so as to contact with the falling washing solution and moving the porous membrane in axis directions of a pair of cylindrical rotors, of which axis directions are not parallel to each other, while transporting the porous membrane to reciprocate between the pair of cylindrical rotors.

(13) The method of producing a porous membrane according to any one of (1) to (7), in which the washing step includes transporting the porous membrane so as to contact with the falling washing solution and such that a falling direction of the washing solution intersects with a transporting direction of the porous membrane and moving the porous membrane in axis directions of a pair of cylindrical rotors while transporting the porous membrane to reciprocate between the pair of cylindrical rotors.

(14) The method of producing a porous membrane according to any one of (1) to (7), in which the washing step includes transporting the porous membrane in the same direction as or the opposite direction to a falling direction of the washing solution using a guide member, which is provided at a fall portion of the washing solution and restricts the transporting of the porous membrane, such that the porous membrane contacts with the washing solution falling from an end of a flow path through which the washing solution flows.

(15) The method of producing a porous membrane according to (14), in which the washing step includes transporting the porous membrane in the same direction as or the opposite direction to a falling direction of the washing solution using transport means, which is provided at fall portions of the washing solution, such that the porous membrane contacts with the washing solution sequentially moving from one to another of two or more flow paths through which the water solution flows.

(16) The method of producing a porous membrane according to (15), in which the two or more flow paths are arranged in a zigzag shape.

(17) A washing apparatus that washes a porous membrane, obtained by coagulating a membrane-forming raw material solution containing a hydrophobic polymer, a hydrophilic polymer, and a solvent in a coagulating solution, to remove material remaining in the porous membrane, the washing apparatus including: fall means for causing a washing solution to fall; and transport means for transporting a porous membrane so as to contact with a falling washing solution.

(18) The washing apparatus according to (17), in which the transport means is for transporting the porous membrane parallel to a falling direction of the washing solution.

(19) The washing apparatus according to (17) or (18), in which the transport means includes a pair of cylindrical rotors and is means for moving a porous membrane in axis directions of the pair of cylindrical rotors while reciprocating the porous membrane between the pair of cylindrical rotors.

(20) The washing apparatus according to (17), in which the transport means includes two or more cylindrical rotors, which are alternately arranged, and is means for moving a porous membrane from an upstream cylindrical rotor to a downstream cylindrical rotor while sequentially transporting the porous membrane between the cylindrical rotors.

(21) The washing apparatus according to (20), in which the transport means is for transporting the porous membrane parallel to a falling direction of the washing solution.

(22) The washing apparatus according to (20), in which the transport means is for transporting the porous membrane perpendicular to a falling direction of the washing solution.

(23) The washing apparatus according to (17), in which the transport means is transport means for transporting a porous membrane in the same direction as or the opposite direction to a falling direction of the washing solution, and the transport means includes a pair of cylindrical rotors, of which axis directions are not parallel to each other, and is means for moving a porous membrane in axis directions of the pair of cylindrical rotors while transporting the porous membrane to reciprocate between the pair of cylindrical rotors.

(24) The washing apparatus according to (17), in which the transport means is transport means for transporting the porous membrane so as to contact with fall means for causing the washing solution to fall and with a falling washing solution and such that the falling direction of the washing solution intersects with a transporting direction of the porous membrane, and the transport means includes a pair of cylindrical rotors and is means for moving a porous membrane in axis directions of the pair of cylindrical rotors while transporting the porous membrane to reciprocate between the pair of cylindrical rotors.

(25) The washing apparatus according to (18), in which the transport means is transport means for transporting the porous membrane parallel to a falling direction of a washing solution, the fall means includes a flow path through which the washing solution flows and which is obliquely arranged such that the washing solution falls from an end thereof, and the transport means includes a guide member, which restricts the transporting of the porous membrane, at a fall portion to which the washing solution falls from the flow path.

(27) The washing apparatus according to (26), in which the fall means includes two or more flow paths.

(28) The washing apparatus according to (27), in which the two or more flow paths are arranged in a zigzag shape such that the washing solution sequentially falls and moves from one flow path to another flow path.

Advantageous Effects of Invention

According to the present invention, it is possible to provide a method of producing a porous membrane capable of efficiently removing a solvent from a porous membrane within a short period of time at a low cost without large facilities, and a washing apparatus suitably used for the production process.

Brief Description of Drawings

FIG. 1 is a front view illustrating an example of a washing apparatus according to a first embodiment of the present invention.

FIG. 2 is a side view of the washing apparatus illustrated in FIG. 1.

FIG. 3A is a front view illustrating another example of transport means included in the washing apparatus of FIG. 2.

FIG. 3B is a side view illustrating another example of transport means included in the washing apparatus of FIG. 2.

FIG. 4 is a perspective view illustrating another example of transport means included in the washing apparatus of FIG. 2.

FIG. 5A is a perspective view illustrating another example of transport means included in the washing apparatus of FIG. 2.

FIG. 5B is a perspective view illustrating another example of transport means included in the washing apparatus of FIG. 2.

FIG. 6 is a perspective view illustrating another example of fall means and transport means according to the first embodiment of the present invention.

FIG. 7 is a graph illustrating the results of Test Examples 1 to 5.

FIG. 8 is a graph illustrating the result of Example 1.

FIG. 9 is a cross-sectional view illustrating an example of a washing apparatus of the related art.

FIG. 10 is a front view illustrating an example of a washing apparatus according to a second embodiment of the present invention.

FIG. 11 is a partial perspective view of the washing apparatus illustrated in FIG. 10.

FIG. 12 is a front view illustrating another example of a washing apparatus according to a third embodiment of the present invention.

FIG. 13 is a partial perspective view of the washing apparatus illustrated in FIG. 11.

FIG. 14 is a front view illustrating an example of the washing apparatus according to the third embodiment of the present invention.

FIG. 15 is a side view of the washing apparatus illustrated in FIG. 14.

FIG. 16 is a side view illustrating another example of transport means included in the washing apparatus according to the third embodiment of the present invention.

FIG. 17 is a front view illustrating an example of a washing apparatus according to a fourth embodiment of the present invention.

FIG. 18 is a partial perspective view of the washing apparatus illustrated in FIG. 17.

FIG. 19A is a front view illustrating another example of the washing apparatus, according to the fourth embodiment of the present invention.

FIG. 19B is a partial perspective view of FIG. 19A.

FIG. 20A is a front view illustrating another example of the washing apparatus according to the fourth embodiment of the present invention.

FIG. 20B is a partial perspective view of FIG. 20A.

FIG. 21 is a side view illustrating an example of a washing apparatus according to a fifth embodiment of the present invention.

FIG. 22 is a perspective view illustrating another example of the arrangement of a pair of upper and lower cylindrical rotors.

FIG. 23A is a perspective view illustrating another example of a guide member.

FIG. 23B is a perspective view illustrating another example of the guide member.

FIG. 24A is a perspective view illustrating another example of the guide member.

FIG. 24B is a perspective view illustrating another example of the guide member.

FIG. 24C is a perspective view illustrating another example of the guide member.

FIG. 25 is a side view illustrating another example of the washing apparatus according to the present invention.

Description of Embodiments

Hereinafter, embodiments of the present invention will be described in detail referring to the drawings.

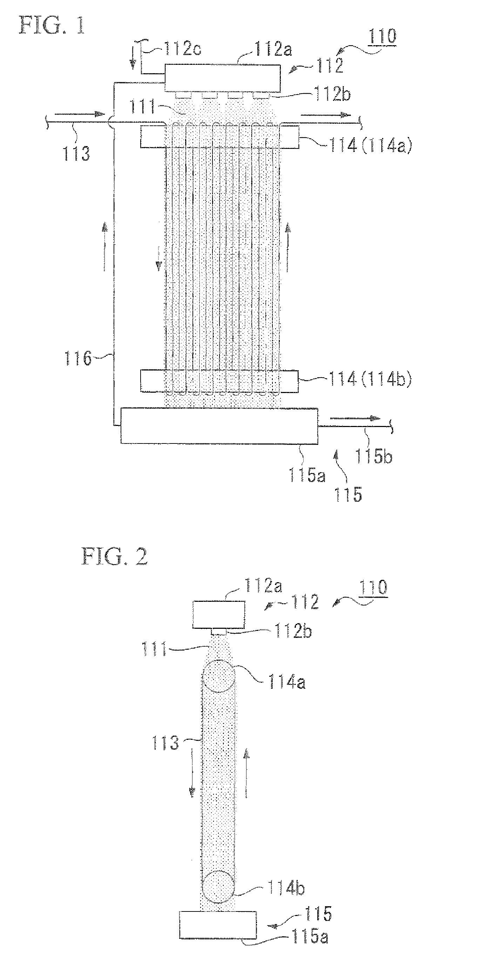

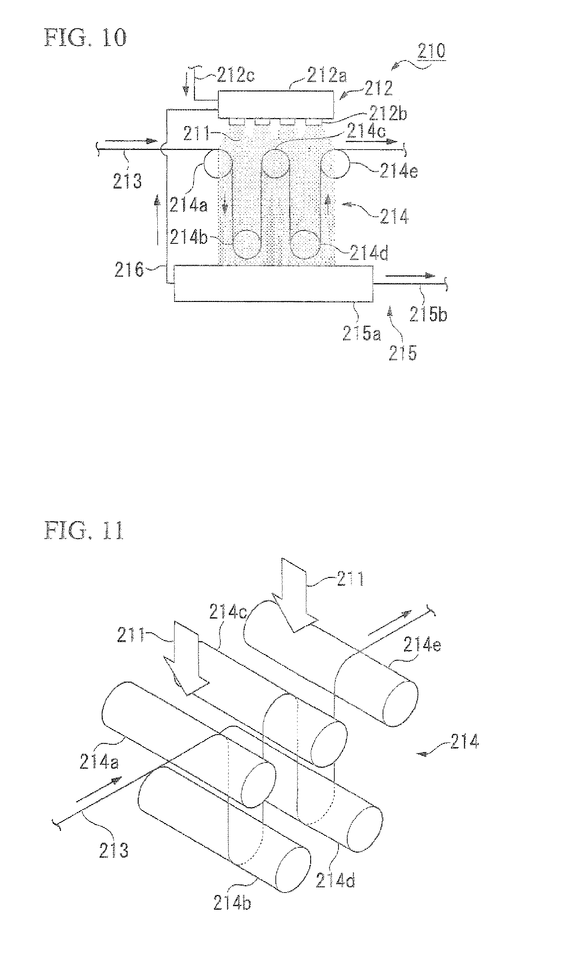

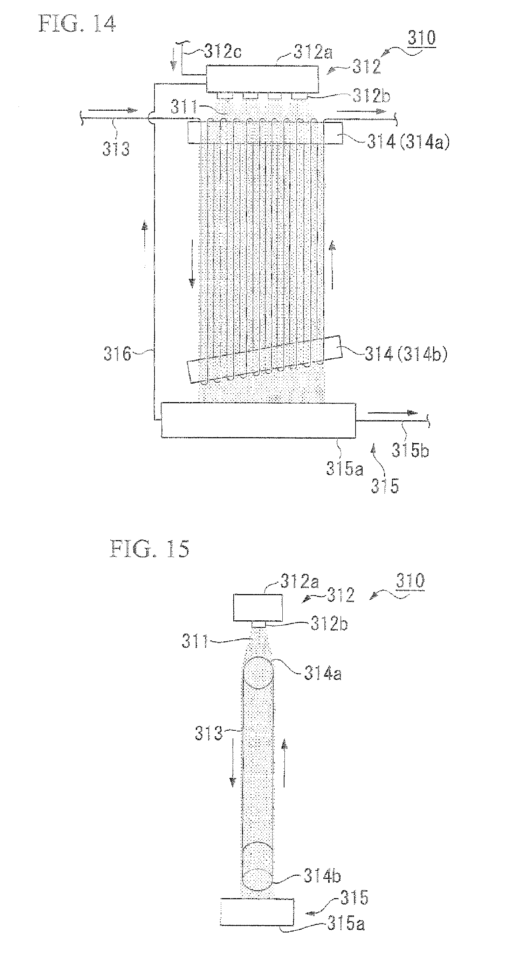

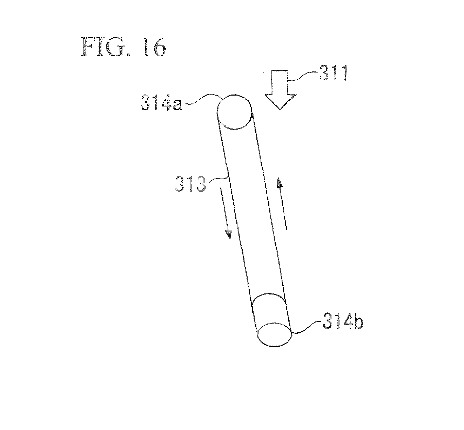

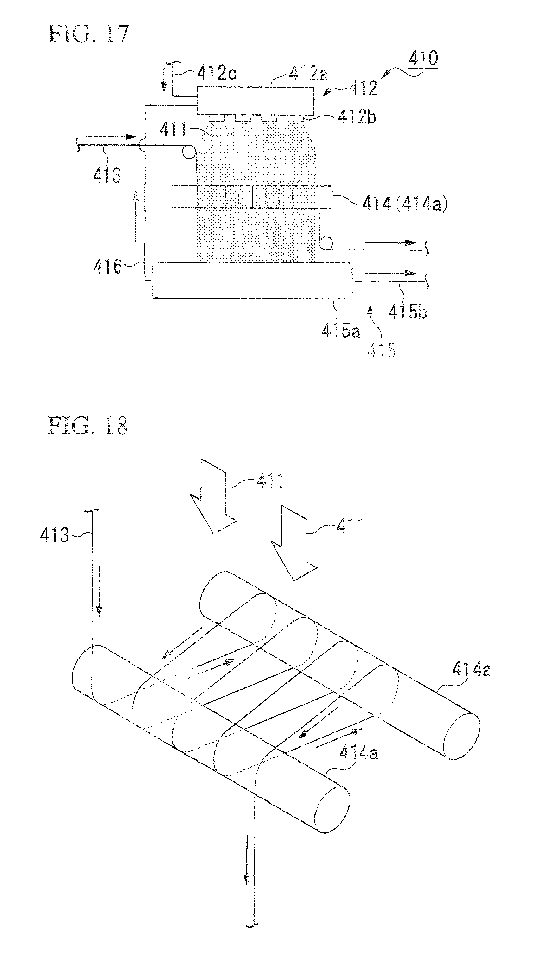

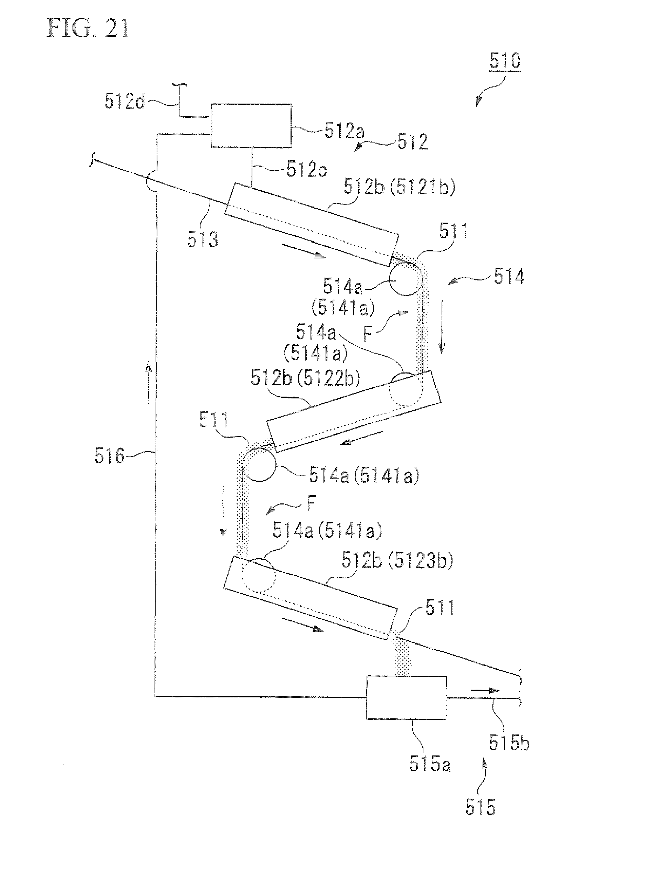

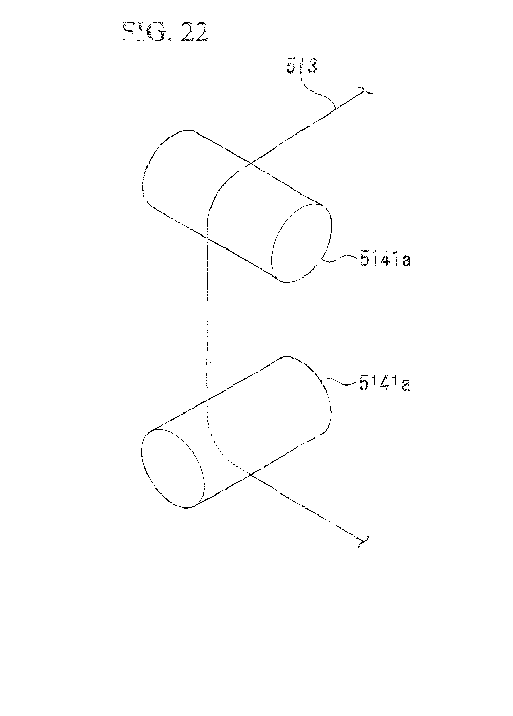

The same components of FIGS. 2 to 6 as those of an embodiment illustrated in FIG. 1. are represented by the same reference numerals; the same components of FIGS. 11 to 13 as those of an embodiment illustrated in FIG. 10 are represented by the same reference numerals; the same components of FIGS. 15 and 16 as those of an embodiment illustrated in FIG. 14 are represented by the same reference numerals; the same components of FIGS. 18 to 19B as those of an embodiment illustrated in FIG. 17 are represented by the same reference numerals; and the same components of FIGS. 22 to 24C as those of an embodiment illustrated in FIG. 21 are represented by the same reference numerals, and the details of the respective descriptions thereof will not be repeated.

[Washing Apparatus]

A washing apparatus according to the present invention is an apparatus for washing a porous membrane, obtained by coagulating a membrane-forming raw material solution in a coagulating solution, to remove material such as a solvent remaining in the porous membrane.

The material remaining in the porous membrane is a material other than major components of the porous membrane and is derived from the production process of the porous membrane, and examples thereof include a solvent which is used in the production process of the porous membrane and a by-product which is produced in the production process of the porous membrane.

FIG. 1 or 2 illustrates an example of a washing apparatus according to a first embodiment of the present invention. FIG. 1 is a front view and FIG. 2 is a side view. A washing apparatus 110 illustrated in FIG. 1 or 2 includes fall means 112 for causing a washing solution 111 to fall, that is, for causing the washing solution 111 to fall in the vertical direction; transport means 114 for transporting a porous membrane 113 so as to contact with the falling washing solution 111; recovery means 115 for recovering the falling washing solution; and a return line 116 for returning the recovered washing solution to the fall means 112.

The fall means 112 causes the washing solution 111 to fall, that is, causes the washing solution 111 to fall in the vertical direction.

The fall means 112 illustrated in FIG. 1 or 2 includes a storage tank 112a in which the washing solution 111 is stored, one or plural discharge openings 112b, 112b, ... which discharge the washing solution 111 in the vertical direction; and a supply line 112c which supplies a fresh washing solution to the storage tank 112a.

The shape of the discharge opening 112b is not particularly limited.

The transport means 114 transports the porous membrane 113 so as to contact with the falling washing solution 111, that is, the washing solution 111 falling in the vertical direction.

According to an aspect of the first embodiment of the present invention, when the porous membrane is in contact with the falling washing solution, the washing solution is not in contact with means for transporting a liquid such as a gutter. In this washing apparatus, when the porous membrane is arranged so as to be in contact with the falling washing solution, it is sufficient that a portion, which is arranged such that the washing solution is not in contact with the means for transporting a liquid such as a gutter, be included. In the other portions, when the porous membrane is in contact with the washing solution, the washing solution may be in contact with the means for transporting a liquid such as a gutter.

According to another aspect of the first embodiment of the present invention, the washing solution falling in the vertical direction washes the porous membrane.

According to still another aspect of the first embodiment of the present invention, the washing solution falling in the vertical direction free-falls.

According to still another aspect of the first embodiment of the present invention, in portions other than the means for transporting a liquid such as a gutter, the washing solution falling in the vertical direction washes the porous membrane when being in contact with the porous membrane.

The transport means 114 illustrated in FIG. 1 or 2 includes a pair of upper and lower cylindrical rotors 114a and 114b which are arranged such that axis directions thereof are horizontal. When these cylindrical rotors 114a and 114b rotate, the porous membrane 113 moves in an axis direction of the cylindrical rotor 114a or 114b while reciprocating between the cylindrical rotors 114a and 114b.

When moving between the cylindrical rotors 114a and 114b, a transporting direction of the porous membrane 113 is parallel to a falling direction of the washing solution 11.

However, in the first embodiment of the present invention, "parallel" described in the case where the transporting direction of the porous membrane 113 is parallel to the falling direction of the washing solution 111 does not represent being perfectly parallel. For example, when the washing solution 111 falls downward, it is sufficient that the porous membrane 113 be also transported downward and/or in the opposite direction thereto, in practice, in the same direction as and/or the opposite direction to the falling direction of the washing solution 111.

That is, when moving from the cylindrical rotor 114a to the cylindrical rotor 114b, the transporting direction of the porous membrane 113 is the same as the falling direction of the washing solution 11; and when moving from the cylindrical rotor 114b to the cylindrical rotor 114a, the transporting direction of the porous membrane 113 is opposite to the falling direction of the washing solution 111.

The length of the cylindrical rotor 114a or 114b; and the number of times the porous membrane 113 reciprocates between the cylindrical rotors 114a and 114b are appropriately determined according to the concentration of a residual solvent which is contained in the porous membrane 113. There is a tendency that, the higher the residual solvent concentration, the longer the length of the cylindrical rotor 114a or 114b and the more the number of times of reciprocating.

The recovery means 115 recovers the washing solution 111 falling from the fall means 112.

The recovery means 115 includes a recovery tank 115a which recovers the washing solution 111; and a discharge line 115b which discharges a part of the recovered washing solution 111 to the outside of the system, and is provided below the cylindrical rotor 114b.

The return line 116 returns a residue of the washing solution 111, which is recovered by the recovery means 115 and is not discharged, to the fall means 112. The recovery tank 115a is connected to the storage tank 12a through the return line 116.

FIG. 10 or 11 illustrates an example of a second embodiment of the present invention. FIG. 10 is a front view and FIG. 11 is a perspective view of transport means described below.

A washing apparatus 210 illustrated in FIG. 10 or 11 includes fall means 212 for causing a washing solution 211 to fall, that is, for causing the washing solution 211 to fall in the vertical direction; transport means 214 for transporting a porous membrane 213 so as to contact with the falling washing solution 211; recovery means 215 for recovering the falling washing solution; and a return line 216 for returning the recovered washing solution to the fall means 212.

The fall means 212 causes the washing solution 211 to fall, that is, causes the washing solution 211 to fall in the vertical direction.

The fall means 212 illustrated in FIG. 10 or 11 includes a storage tank 212a in which the washing solution 211 is stored; one or plural discharge openings 212b, 212b, ... which discharge the washing solution 211 in the vertical direction; and a supply line 212c which supplies a fresh washing solution to the storage tank 212a.

The shape of the discharge opening 212b is not particularly limited.

The transport means 214 transports the porous membrane 213 so as to contact with the falling washing solution 211. In the transport means 214 of this example, the porous membrane 213 is transported in the same direction as and the opposite direction to a falling direction of the washing solution 211.

According to an aspect of the second embodiment of the present invention, when the porous membrane is in contact with the falling washing solution, the washing solution is not in contact with means for transporting a liquid such as a gutter. In this washing apparatus, when the porous membrane is arranged so as to be in contact with the falling washing solution, it is sufficient that a portion, which is arranged such that the washing solution is not in contact with the means for transporting a liquid such as a gutter, be included, In the other portions, when the porous membrane is in contact with the washing solution, the washing solution may be in contact with the means for transporting a liquid such as a gutter.

According to another aspect of the second embodiment of the present invention, the washing solution falling in the vertical direction washes the porous membrane.

According to still another aspect of the second embodiment of the present invention, the washing solution falling in the vertical direction free-falls.

According to still another aspect of the second embodiment of the present invention, in portions other than the means for transporting a liquid such as a gutter, the washing solution falling in the vertical direction washes the porous membrane when being in contact with the porous membrane.

As illustrated in FIG. 10 or 11, the transport means 214 includes two or more cylindrical rotors 214a to 214e which are alternately arranged. In addition, in this example, the cylindrical rotors 214a to 214e are horizontally and arranged in two rows, and axis directions thereof are horizontal.

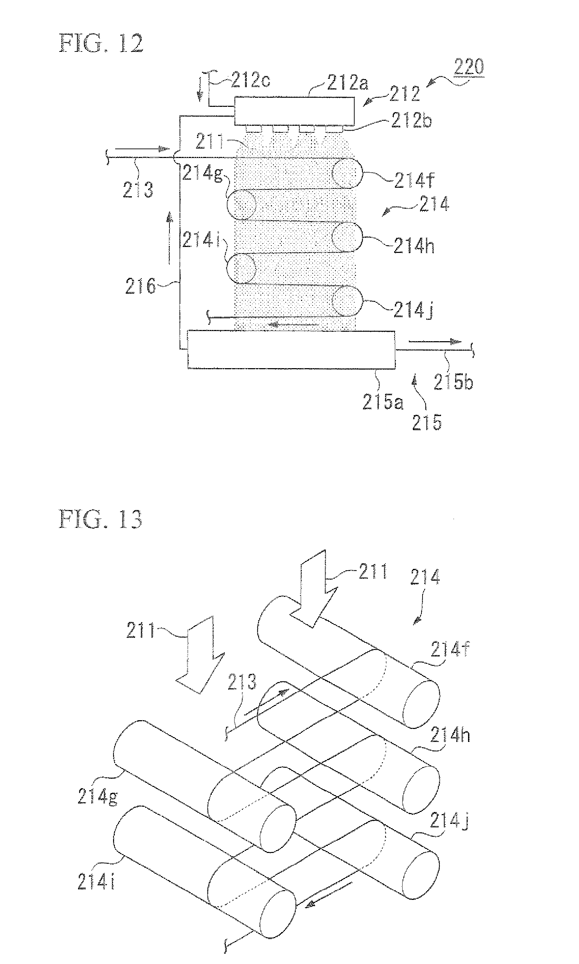

"Being alternately arranged" described herein represents the state in which the cylindrical rotors 214b and 214d in a second row are positioned at pitches between the cylindrical rotors 214a, 214c, and 214e in a first row (FIG. 10); or the state in which the cylindrical rotor 214g and 214i in a second row are positioned at pitches between the cylindrical rotors 214f, 214h, and 214j in a first row, that is, the state in which the cylindrical rotors are arranged in a zigzag shape (FIG. 12).

When these cylindrical rotors 214a to 214e rotate, the porous membrane 213 moves from the upstream cylindrical rotor 214a to the downstream cylindrical rotor 214e while reciprocating between the cylindrical rotors 214a to 214e, that is, while being sequentially transported between the cylindrical rotors 214a to 214e.

In this example, when moving from the cylindrical rotor 214a to the cylindrical rotor 214b or when moving from the cylindrical rotor 214c to the cylindrical rotor 214d, the transporting direction of the porous membrane 213 is the same as the falling direction of the washing solution 211; and when moving from the cylindrical rotor 214b to the cylindrical rotor 214c or when moving from the cylindrical rotor 214d. to the cylindrical rotor 214e, the transporting direction of the porous membrane 213 is opposite to the falling direction of the washing solution 211

The number of times the porous membrane 213 reciprocates between the two or more cylindrical rotors (that is, the number of the cylindrical rotors) is appropriately determined according to the concentration of a residual solvent which is contained in the porous membrane 213. There is a tendency that, the higher the residual solvent concentration, the more the number of times of reciprocating (the number of the cylindrical rotors).

The recovery means 215 recovers the washing solution 211 falling from the fall means 212.

The recovery means 215 includes a recovery tank 215a which recovers the washing solution 211; and a discharge line 215b which discharges a part of the recovered washing solution 211 to the outside of the system, and is provided below the cylindrical rotor 214b or 214d in the second row.

The return line 216 returns a residue of the washing solution 211, which is recovered by the recovery means 215 and is not discharged, to the fall means 212. The recovery tank 215a is connected to the storage tank 212a through the return line 216.

FIG. 14 or 15 schematically illustrates an example of a washing apparatus according to a third embodiment of the present invention. FIG. 14 is a front view and FIG. 15 is a side view.

A washing apparatus 310 illustrated in FIG. 14 or 15 includes fall means 312 for causing a washing solution 311 to fall, that is, for causing the washing solution 311 to fall in the vertical direction; transport means 314 for transporting a porous membrane 313 in the same direction as or the opposite direction to a falling direction of the washing solution 311 so as to contact with the falling washing solution 311; recovery means 315 for recovering the falling washing solution; and a return line 316 for returning the recovered washing solution to the fall means 312.

The fall means 312 causes the washing solution 311 to fall, that is, causes the washing solution 311 to fall in the vertical direction.

The fall means 312 illustrated in FIG. 14 or 15 includes a storage tank 312a in which the washing solution 31 is stored; one or plural discharge openings 312b, 312b, ... which discharge the washing solution 311 in the vertical direction; and a supply line 312c which supplies a fresh washing solution to the storage tank 312a.

The shape of the discharge opening 312b is not particularly limited.

The transport means 314 transports the porous membrane 313 in the same direction as or the opposite direction to the falling direction of the washing solution 311 so as to contact with the falling washing solution 311.

According to an aspect of the third embodiment of the present invention, when the porous membrane is in contact with the falling washing solution, the washing solution is not in contact with means for transporting a liquid such as a gutter. In this washing apparatus, when the porous membrane is arranged so as to be in contact with the falling washing solution, it is sufficient that a portion, which is arranged such that the washing solution is not in contact with the means for transporting a liquid such as a gutter, be included. In the other portions, when the porous membrane is in contact with the washing solution, the washing solution may be in contact with the means for transporting a liquid such as a gutter.

According to another aspect of the third embodiment of the present invention, the washing solution falling in the vertical direction washes the porous membrane.

According to still another aspect of the third embodiment of the present invention, the washing solution falling in the vertical direction free-falls.

According to still another aspect of the third embodiment of the present invention, in portions other than the means for transporting a liquid such as a gutter, the washing solution falling in the vertical direction washes the porous membrane when being in contact with the porous membrane.

As illustrated in FIG. 14 or 15, the transport means 314 includes a pair of upper and lower cylindrical rotors 314a and 314b which are arranged such that axis directions thereof are not parallel to each other in the same plane including the central axes.

In addition, in this example, a second cylindrical rotor 314b is arranged immediately below a first cylindrical rotor 314a, and the axis direction of the first cylindrical rotor 314a is horizontal. When these cylindrical rotors 314a and 314b rotate, the porous membrane 313 moves in the axis direction of the cylindrical rotor 314a or 314b while being transported to reciprocate between the cylindrical rotors 314a and 314b.

When moving from the cylindrical rotor 314a to the cylindrical rotor 314b, the transporting direction of the porous membrane 313 is the same as the falling direction of the washing solution 311; and when moving from the cylindrical rotor 314b to the cylindrical rotor 314a, the transporting direction of the porous membrane 313 is opposite to the falling direction of the washing solution 311

The length of the cylindrical rotor 314a or 314b; and the number of times the porous membrane 313 reciprocates between the cylindrical rotors 314a and 314b are appropriately determined according to the concentration of a residual solvent which is contained in the porous membrane 313. There is a tendency that, the higher the residual solvent concentration, the longer the length of the cylindrical rotor 314a or 314b and the more the number of times of reciprocating.

The recovery means 315 recovers the washing solution 311 falling from the fall means 312.

The recovery means 315 includes a recovery tank 315a which recovers the washing solution 311; and a discharge line 315b which discharges a part of the recovered washing solution 311 to the outside of the system, and is provided below the cylindrical rotor 314b.

The return line 316 returns a residue of the washing solution 311, which is recovered by the recovery means 315 and is not discharged, to the fall means 312. The recovery tank 315a is connected to the storage tank 312a through the return line 316.

FIG. 17 or 18 illustrates an example of a fourth embodiment of the present invention. FIG. 17 is a front view and FIG. 18 is a perspective view of transport means described below.

A washing apparatus 410 illustrated in FIG. 17 or 18 includes fall means 412 for causing a washing solution 411 to fall, that is, for causing the washing solution 411 to fall in the vertical direction; transport means 414 for transporting a porous membrane 413 so as to contact with the falling washing solution 411 and such that a falling direction of the washing solution 411 intersects with a transporting direction of the porous membrane 413; recovery means 415 for recovering the falling washing solution; and a return line 416 for returning the recovered washing solution to the fall means 412.

The fall means 412 causes the washing solution 411 to fall, that is, causes the washing solution 411 to fall in the vertical direction. The fall means 412 illustrated in FIG. 17 or 18 includes a storage tank 412a in which the washing solution 411 is stored; one or plural discharge openings 412b, 412b, ... which discharge the washing solution 411 in the vertical direction; and a supply line 412c which supplies a fresh washing solution to the storage tank 412a.

The shape of the discharge opening 412b is not particularly limited.

The transport means 414 transports the porous membrane 413 so as to contact with the falling washing solution 411 and such that the falling direction of the washing solution 411 intersects with the transporting direction of the porous membrane 413.

According to an aspect of the fourth embodiment of the present invention, when the porous membrane is in contact with the falling washing solution, the washing solution is not in contact with means for transporting a liquid such as a gutter. In this washing apparatus, when the porous membrane is arranged so as to be in contact with the falling washing solution, it is sufficient that a portion, which is arranged such that the washing solution is not in contact with the means for transporting a liquid such as a gutter, be included. In the other portions, when the porous membrane is in contact with the washing solution, the washing solution may be in contact with the means for transporting a liquid such as a gutter.

According to another aspect of the fourth embodiment of the present invention, the washing solution falling in the vertical direction washes the porous membrane.

According to still another aspect of the fourth embodiment of the present invention, the washing solution falling in the vertical direction free-falls.

According to still another aspect of the fourth embodiment of the present invention, in portions other than the means for transporting a liquid such as a gutter, the washing solution falling in the vertical direction washes the porous membrane when being in contact with the porous membrane.

As illustrated in FIG. 17 or 18, the transport means 414 includes a pair of left and right cylindrical rotors 414a and 414a which are arranged such that axis directions thereof are parallel to each other. In addition, in this example, a second cylindrical rotor 414a is arranged immediately beside a first cylindrical rotor 414a, and the axis directions of both the cylindrical rotor 414a and 414a are horizontal. When these cylindrical rotors 414a and 414a rotate, the porous membrane 413 moves in the axis direction of the cylindrical rotor 414a or 414a while reciprocating between the cylindrical rotors 414a and 414a.

The length of the cylindrical rotor 414a or 414a; and the number of times the porous membrane 413 reciprocates between the cylindrical rotors 414a and 414a are appropriately determined according to the concentration of a residual solvent which is contained in the porous membrane 413. There is a tendency that, the higher the residual solvent concentration, the longer the length of the cylindrical rotor 414a or 414a and the more the number of times of reciprocating.

The recovery means 415 recovers the washing solution 411 falling from the fall means 412.

The recovery means 415 includes a recovery tank 415a which recovers the washing solution 411; and a discharge line 415b which discharges a part of the recovered washing solution 411 to the outside of the system, and is provided below the cylindrical rotor 414a or 414a.

The return line 416 returns a residue of the washing solution 411, which is recovered by the recovery means 415 and is not discharged, to the fall means 412. The recovery tank 415a is connected to the storage tank 412a through the return line 416.

FIG. 21 illustrates an example of a washing apparatus according to a fifth embodiment of the present invention. A washing apparatus 510 illustrated in FIG. 21 includes fall means 512 for causing a washing solution 511 to fall; transport means 514 for transporting a porous membrane 513 in the same direction as a falling direction of the washing solution 511 so as to contact with the falling washing solution 511; recovery means 515 for recovering the falling washing solution; and a return line 516 for returning the recovered washing solution to the fall means 512.

The fall means 512 causes the washing solution 511 to fall, that is, causes the washing solution 511 to fall in the vertical direction.

The fall means 512 illustrated in FIG. 21 includes a storage tank 512a in which the washing solution 511 is stored; one or plural flow paths 512b through which the washing solution 511 supplied from the storage tank 512a flows; a first supply line 512c which supplies the washing solution 511 from the storage tank 512a to a first flow path 5121b positioned most upstream; and a second supply line 512d which supplies a fresh washing solution to the storage tank 512a. It is sufficient that the washing apparatus include one or plural portions (fall portions F) in which the washing solution falls and moves; and that the fall means 512 include the one or plural flow paths 512b.

The one or plural flow paths 512b are obliquely arranged such that the washing solution 511 falls from one end of each flow path 512b; and are arranged in a zigzag shape such that the washing solution 511 sequentially falls and moves from one flow path 512b to another flow path 512b.

In the case of the washing apparatus 510 illustrated in FIG. 21, the washing solution 511 supplied from the storage tank 512a flows through the inside of the first flow path 5121b positioned most upstream, falls from an end of the flow path 5121b, and moves to a second flow path 5122b. The washing solution 511 moved to the second flow path 5122b flows through the inside of the flow path 5122b, falls from an end of the flow path 5122b, and moves to a third flow path 5123b. The washing solution 511 moved to the third flow path 5123b flows through the inside of the flow path 5123b, is discharged from an end of the flow path 5123b, and is recovered to a recovery tank 515a described below of the recovery means 515.

The material, shape, length, and the like of the flow path 512b are not particularly limited as long as the washing solution 511 can flow therethrough, and examples of a cross-sectional shape include a quadrangular shape, an inverted triangular shape, and a semispherical shape.

The flow path 512b may have a gutter shape or a pipe shape.

The distance from one flow path 512b to another flow path 512b and the number of the flow paths 512b are appropriately determined according to the concentration of a residual solvent which is contained in the porous membrane 513. There is a tendency that, the higher the residual solvent concentration, the longer the distance between the flow paths 512b and the more the number of the flow paths 512b. The distance between the flow paths 512b being increased represents the distance of portions (fall portion F), through which the washing solution 511 falls and moves from one flow path 512b to another flow path 512b, being increased. In addition, the number of the flow paths 512b being increased represents that the number of the fall portions F being increased.

The transport means 514 illustrated in FIG. 21 transports the porous membrane 513 in the same direction as the falling direction of the washing solution 511 so as to contact with the falling washing solution 511.

According to an aspect of the fifth embodiment of the present invention, when the porous membrane is in contact with the falling washing solution, the washing solution is not in contact with means for transporting a liquid such as the above-described flow paths. In this washing apparatus, when the porous membrane is arranged so as to be in contact with the falling washing solution, it is sufficient that a portion, which is arranged such that the washing solution is not in contact with the means for transporting a liquid such as a gutter, be included. In the other portions, when the porous membrane is in contact with the washing solution, the washing solution may be in contact with the means for transporting a liquid such as a gutter.

According to another aspect of the fifth embodiment of the present invention, the washing solution falling in the vertical direction washes the porous membrane.

According to still another aspect of the fifth embodiment of the present invention, the washing solution falling in the vertical direction free-falls.

According to still another aspect of the fifth embodiment of the present invention, in portions other than the means for transporting a liquid such as a gutter, the washing solution falling in the vertical direction washes the porous membrane when being in contact with the porous membrane.

The transport means 514 includes a guide member 514a, which restricts the transporting of the porous membrane 513, at the fall portions F. The guide member 514 is not particularly limited as long as it can guide the porous membrane 513 and restrict the transporting thereof. For example, in this example, as the guide member 514a, a pair of upper and lower cylindrical rotors 5141a and 5141 a are provided at two fall portions F such that axis directions thereof are horizontal, respectively.

In the case of the washing apparatus 510 illustrated in FIG. 21, the porous membrane 513 which has passed through the first flow path 5121b contacts with the falling washing solution 511 at the fall portion F between the first flow path 5121b and the second flow path 5122b; is transported while moving from one (upstream) to the other (downstream) of the pair of upper and lower cylindrical rotors 5141a and 5141a (that is, while moving in the same direction as the falling direction of the washing solution 511), and is guided to the second flow path 5122b. The porous membrane 513 guided to the second flow path 5122b passes through the flow path 5121b; contacts with the falling washing solution 511 at the fall portion F between the second flow path 5122b and the third flow path 5123b; is transported while moving from one (upstream) to the other (downstream) of the pair of upper and lower cylindrical rotors 5141a and 5141a; and is guided to the third flow path 5123b.

As described above, there is a tendency that, the higher the residual solvent concentration of a solvent which is contained in the porous membrane 513, the longer the distance between the flow paths 512b and the more the number of the flow paths 512b. As a result, the distance of the fall portions F is increased. Accordingly, it is preferable that, the higher the residual solvent concentration, the longer the distance between the pair of upper and lower cylindrical rotors 5141a and 5141a which are provided in the fall portions F.

The recovery means 515 recovers the washing solution 511 which has flown through the flow path 512b positioned most upstream of the fall means 512 and has been discharged.

The recovery means 515 illustrated in FIG. 21 includes a recovery tank 515a which recovers the washing solution 511 and a discharge line 515b which discharges a part of the recovered washing solution 511 to the outside of the system, and is provided below the third flow path 5123b.

The return line 516 returns a residue of the washing solution 511, which is recovered by the recovery means 515 and is not discharged, to the fall means 512. The recovery tank 515a is connected to the storage tank 512a through the return line 516.

As the washing solution 111, 211, 311, 411, or 511, water is preferable from the viewpoint of a high effect of washing a solvent. Examples of water to be used include distilled water, ion exchange water, tap water, industrial water, river water, and well water. Such water may be mixed with alcohol, an inorganic salt, an oxidant, or a surfactant for use.

In addition, as the washing solution 111, 211, 311, 411, or 511, a mixed solution of a solvent contained in the membrane-forming raw material solution and such water can be used. However, when this mixed solution is used, it is preferable that the concentration of the solvent be lower than or equal to 10% by mass.

The temperature of the washing solution 111, 211, 311, 411, or 511 is not particularly limited as long as it is higher than or equal to 0°C. However, in order to prevent a reduction in the diffusive movement rate of a material such as a solvent remaining in the porous membrane, it is preferable that the temperature be higher. The temperature is preferably higher than or equal to 50°C and more preferably higher than or equal to 80°C.

According to the washing apparatus 110, 210, 310, or 410 of the present invention, the porous membrane 113, 213, 313, or 413 is transported so as to contact with the falling washing solution 111, 211, 311, or 411. As a result, the washing solution 111, 211, 311, or 411 flows and falls from a membrane surface while being in contact with the porous membrane 113, 213, 313, or 413.

Furthermore, according to the washing apparatus 510 of the present invention, the porous membrane 513 is washed while passing through the flow path 512b and being in contact with the falling washing solution at the washing portions F. In particular, the porous membrane 513 is transported so as to contact with the falling washing solution 511 at the fall portions F. As a result, the washing solution 511 flows and falls from a surface of the porous membrane 513 while being in contact therewith.

Accordingly, a material such as a solvent in the porous membrane is diffused and transferred from the inside of the membrane to a membrane surface; and the material is further diffused and transferred from the membrane surface to the washing solution 111, 211, 311, 411, or 511 and is removed from the porous membrane.

In addition, while the washing solution 111, 211, 311, 11, or 511 falls, the outermost interface of the washing solution 111, 211, 311, 411, or 511 flowing and falling from a surface of the porous membrane 113, 213, 313, 13, or 513 is in contact with the air in the atmospheric pressure, and thus the washing solution 111, 211, 311, 411, or 511 has a free surface. Therefore, since it is difficult for the washing solution 111, 211, 311, 411, or 511 to receive a resistance, the flow rate of the washing solution is increased compared to the method in which a porous membrane is washed while causing a washing solution to flow using a washing bath such as a gutter as disclosed in PTL 1. In addition, since the outermost interface of the washing solution is in contact with the air in the atmospheric pressure, the washing solution has a free surface. Therefore, compared with the method of the related art in which the porous membrane 123 is dipped in the washing tank 122 for washing as illustrated in FIG. 9, an excess amount of water pressure is not applied to the porous membrane, the infiltration of the washing solution into the porous membrane is suppressed, the retention of the washing solution is prevented, and thus a fresh washing solution can be always present on a surface of the porous membrane. Accordingly, the present invention has a superior washing efficiency.

Furthermore, since the washing apparatus 110, 210, 310, 410, or 510 has a superior washing efficiency, a porous membrane can be washed without using a washing bath and thus the number of washing baths (gutter-shaped flow paths) can be reduced compared with PTL 1. Therefore, according to the present invention, a porous membrane can be washed at a low cost without increasing the size of facilities.

The washing described in the present invention refers to the replacement (surface renewal) of a washing solution in contact with a surface of a porous membrane to remove material other than major components of the porous membrane, the material being derived from the production process of the porous membrane, for example, a solvent which is used in the production process of the porous membrane; or a by-product which is produced in the production process of the porous membrane.

The removal described in the present invention refers to reducing the concentration of a material, which is contained in the porous membrane, other than major components of the porous membrane to be lower than or equal to 40%, preferably lower than or equal to 10%, more preferably lower than or equal to 6%, and still more preferably lower than or equal to 3%.

The falling of the washing solution described in the present invention refers to the washing solution falling in the vertical direction. When the washing solution falls in the vertical direction, an angle of the washing solution is preferably lower than or equal to 30° and more preferably lower than or equal to 0° with respect to the vertical direction.

In a case where a solvent is removed from a porous membrane, when the elution solvent concentration of a washing solution near a surface of the porous membrane is lower than the residual solvent concentration of a solvent which is contained in the porous membrane, the diffusion of the solvent from the surface of the porous membrane into the washing solution is promoted and thus the porous membrane is washed.

Furthermore, as illustrated in FIG. 1 or 2, when the porous membrane 113 is transported in the same direction as or the opposite direction to the falling direction of the washing solution 111, the washing solution 111 uniformly and sufficiently contacts with the porous membrane 113. Therefore, the porous membrane 113 is more efficiently washed and a material such as a solvent present in the porous membrane 113 is easily removed.

In addition, according to the washing apparatus 110, the washing solution 111 l always flows and the washing solution 111 in contact with the surface of the porous membrane 113 is replaced. Therefore, compared with the method of the related art in which the washing apparatus 120 is used as illustrated in FIG. 9, the fresh washing solution 111 is always in contact with the porous membrane 113. This means that the surface renewal of the porous membrane 113 is actively performed. Therefore, the state in which the elution solvent concentration of the washing solution near the membrane surface is lower than the residual solvent concentration of a solvent which is contained in the porous membrane can be maintained. As a result, the diffusion of the solvent from the membrane surface into the washing solution is promoted and thus washing can be performed within a short period of time. In particular, when the distance between the cylindrical rotors 114a and 114b is increased, the flow rate of the washing solution 111 is increased, which further promotes the surface renewal of the porous membrane 113.

Furthermore, according to the washing apparatus 210 of the present invention, the cylindrical rotors 214a to 214e of the transport means 214 are alternately arranged. The porous membrane 213 moves from the upstream cylindrical rotor 214a to the downstream cylindrical rotor 214e while reciprocating between the cylindrical rotors 214a to 214e, that is, while being sequentially transported between the cylindrical rotors 214a to 214e. As a result, this configuration is preferable for a case where two or more porous membranes are transported and washed (polypyramidal) and can reduce the size of facilities.

Furthermore, as illustrated in FIG. 10 or 11, when the porous membrane 213 is transported in the same direction as or the opposite direction to the falling direction of the washing solution 211, the washing solution 211 uniformly and sufficiently contacts with the porous membrane 213. Therefore, the porous membrane 213 is more efficiently washed and a material such as a solvent present in the porous membrane 213 is easily removed.

In addition, according to the washing apparatus 210, the washing solution 211 always flows and the washing solution 211 in contact with the surface of the porous membrane 213 is replaced. Therefore, compared with the method of the related art in which the washing apparatus 120 is used as illustrated in FIG. 9, the fresh washing solution 211 is always in contact with the porous membrane 213. This means that the surface renewal of the porous membrane 213 is actively performed. Therefore, the state in which the elution solvent concentration of the washing solution near the membrane surface is lower than the residual solvent concentration of a solvent which is contained in the porous membrane can be maintained. As a result, the diffusion of a material such as a solvent from the membrane surface into the washing solution is promoted and thus washing can be performed within a short period of time. In particular, when the distance between the cylindrical rotors in the first and second rows is increased, the flow rate of the washing solution 211 is increased, which further promotes the surface renewal of the porous membrane 213.

Furthermore, according to the washing apparatus 310, as illustrated in FIG. 14 or 15, since the porous membrane 313 is transported in the same direction as or the opposite direction to the falling direction of the washing solution 311, the washing solution 311 uniformly and sufficiently contacts with the porous membrane 313. Therefore, the porous membrane 313 is efficiently washed and a material such as a solvent present in the porous membrane 313 is easily removed.

According to the washing apparatus 310, when the porous membrane 313 moves, for example, from the first cylindrical rotor 314a to the second cylindrical rotor 314b, the porous membrane 313 has the property of being in contact with the cylindrical rotor 314b at an angle perpendicular to the central axis thereof. The porous membrane 313 which has reached the cylindrical rotor 314b rotates around the circumferential surface of the cylindrical rotor 314b and moves to the cylindrical rotor 314a. At this time, the porous membrane 313 is in contact with the cylindrical rotor 314a at an angle perpendicular to the central axis thereof. The porous membrane 313 which has reached the cylindrical rotor 314a rotates around the circumferential surface of the cylindrical rotor 314a and moves to the cylindrical rotor 314b.

Therefore, when axis directions of a pair of cylindrical rotors are parallel to each other, in a case where a groove (restricting groove) or the like for restricting the transporting of a porous membrane is not formed in these cylindrical rotors, the porous membrane is transported while reciprocating at the same place between the cylindrical rotors. As a result, it is difficult to move the porous membrane to the axis direction of the cylindrical rotor.

However, according to the washing apparatus 310 of the present invention, since the axis directions of the cylindrical rotors 314a and 314b are not parallel to each other, the central axis of the cylindrical rotor 314a or 314b is inclined from a parallel plane by a predetermined angle. As described above, since the porous membrane 313 is in contact with the cylindrical rotor 314a or 314b at an angle perpendicular to each central axis thereof, the porous membrane 313 can move in the axis direction thereof at regular intervals (pitches) without reciprocating at the same place between the cylindrical rotors 314a and 314b. Therefore, it is not necessary that a cylindrical rotor in which a restricting groove is formed be used. In addition, even when cylindrical rotors having a flat circumferential surface are used, a porous membrane can move in the axis direction thereof at regular pitches by transporting the porous membrane to reciprocate between the cylindrical rotors.

The movement pitch of the porous membrane 313 can be arbitrarily changed according to the inclination angles of the central axes of the cylindrical rotor 314a and 314b.

As the inclination angles, it is preferable that an angle be appropriately selected so as to obtain pitches at which, when the cylindrical rotors rotate, the washing solution can fall on the circumferential surface and the surface of the porous membrane.

Therefore, according to the washing apparatus 310 of the present invention, it is not necessary that a restricting groove be formed in the cylindrical rotor 314a or 314b. In addition, since the porous membrane 313 moves in the axis direction thereof while being transported to reciprocate between the cylindrical rotors 314a and 314b, the size of facilities can be reduced.

In addition, according to the washing apparatus 310, the washing solution 311 always flows and the washing solution 311 in contact with the surface of the porous membrane 313 is replaced. Therefore, compared with the method of the related art in which the washing apparatus 120 is used as illustrated in FIG. 9, the fresh washing solution 311 is always in contact with the porous membrane 313. This means that the surface renewal of the porous membrane 313 is actively performed. Therefore, the state in which the elution solvent concentration of the washing solution near the membrane surface is lower than the residual solvent concentration of a solvent which is contained in the porous membrane can be maintained. As a result, the diffusion of a material such as a solvent from the membrane surface into the washing solution is promoted and thus washing can be performed within a short period of time. In particular, when the distance between the cylindrical rotors 314a and 314b is increased, the flow rate of the washing solution 311 is increased, which further promotes the surface renewal of the porous membrane 313.

Furthermore, according to the washing apparatus 410, as illustrated in FIG. 17 or 18, since the porous membrane 413 is transported such that the falling direction of the washing solution 411 intersects with the transporting direction of the porous membrane 413, the washing solution 411 is easily separated from the surface of the porous membrane 413 and thus the washing efficiency is improved. In addition, the porous membrane 413 moves in the axis direction thereof while being transported to reciprocate between the cylindrical rotors 414a and 414a. As a result, the size of facilities is reduced, the fresh washing solution 411 can contact with not only a single surface of the porous membrane 413 but also the opposite surface thereof, and thus the washing efficiency is improved.

In addition, according to the washing apparatus 410, the washing solution 411 always flows and the washing solution 411 in contact with the surface of the porous membrane 413 is replaced. Therefore, compared with the method of the related art in which the washing apparatus 120 is used as illustrated in FIG. 9, the fresh washing solution 411 is always in contact with the porous membrane 413. This means that the surface renewal of the porous membrane 413 is actively performed. Therefore, the state in which the elution solvent concentration of the washing solution near the membrane surface is lower than the residual solvent concentration of a solvent which is contained in the porous membrane can be maintained. As a result, the diffusion of a material such as a solvent from the membrane surface into the washing solution is promoted and thus washing can be performed within a short period of time. In particular, when the distance between the cylindrical rotors 414a and 414a is increased, the flow rate of the washing solution 411 is increased, which further promotes the surface renewal of the porous membrane 413.

Furthermore, according to the washing apparatus 510, as illustrated in FIG. 21, since the porous membrane 513 is transported parallel to the falling direction of the washing solution 511, the washing solution 511 uniformly and sufficiently contacts with the porous membrane 513. Therefore, the porous membrane 513 is efficiently washed and a material such as a solvent present in the porous membrane 513 is easily removed.

However, in the washing apparatus 510, "parallel" described in the case where the porous membrane 513 is transported parallel to the falling direction of the washing solution 511 does not represent being perfectly parallel. For example, when the washing solution 511 falls downward, it is sufficient that the porous membrane 513 be also transported downward and/or in the opposite direction thereto, in practice, in the same direction as and/or the opposite direction to the falling direction of the washing solution 511.

In addition, in the washing apparatus 510 illustrated in FIG. 21, the two or more flow paths 512b are arranged in a zigzag shape, the washing solution 511 falls using the movement of the washing solution 511 from one flow path 512b to another flow path 512b, and the direction change for moving the porous membrane 513 from one flow path 512b to another flow path 512b is performed by the pair of upper and lower cylindrical rotors 5141a and 5141a. Therefore, compared with a case where the direction change is performed by one cylindrical rotor under the same tension conditions, the contact angle between the cylindrical rotor 5141a and the porous membrane 513 is reduced and a force with which the porous membrane 513 is pressed against the cylindrical rotors 5141a can be reduced, thereby obtaining an effect of suppressing the deformation or collapse of the membrane. In addition, when the flow paths 512b are heated, the temperature of the washing solution 511 can be maintained or increased. Furthermore, the washing property can be increased by providing a protrusion, an obstacle, and the like on an inner wall of the flow paths 512b, disturbing the flow of the washing solution 511 which flows along the porous membrane 513, and breaking the fluid film of the washing solution 511 having a concentration distribution near the porous membrane 513.

In addition, according to the washing apparatus 510, the washing solution 511 always flows and the washing solution 511 in contact with the surface of the porous membrane 513 is replaced. Therefore, compared with the method of the related art in which the washing apparatus 20 is used as illustrated in FIG. 9, the fresh washing solution 511 is always in contact with the porous membrane 513. This means that the surface renewal of the porous membrane 513 is actively performed. Therefore, the state in which the elution solvent concentration of the washing solution near the membrane surface is lower than the residual solvent concentration of a solvent which is contained in the porous membrane can be maintained. As a result, the diffusion of a material such as a solvent from the membrane surface into the washing solution is promoted and thus washing can be performed within a short period of time. In particular, when the distance of the fall portions F is increased, the flow rate of the washing solution 511 is increased, which further promotes the surface renewal of the porous membrane 513.

Incidentally, in the case of the method of the related art in which the washing apparatus 120 is used as illustrated in FIG. 9, the porous membrane 123 is transported in the washing tank 122 as described above. Therefore, when the hot water 121 (washing solution) is replaced, it is necessary that the operation be stopped.

However, in the washing apparatus 110, 210 310, 10, or 510 illustrated in FIGS. 1, 2, 10, 11, 14, 15, 17, 18, or 21, the flesh washing solution 111, 211, 311, 411, or 511 is supplied from the supply line 112c, 212c, 312c, or 412c or the second supply line 512d to the storage tank 112a, 212a, 312a, 412a, or 512a. Therefore, it is not necessary that the operation be stopped to replace the washing solution. Furthermore, the falling washing solution 111, 211, 311, 411, or 511 is recovered and a part thereof can be reused for washing the porous membrane 113, 213, 313, 413, or 513. Therefore, the cost can be further reduced.

It is preferable that the transport means according to the present invention and a membrane to be washed, that is, a porous membrane to be washed be arranged so as not to be dipped in a washing tank. It is more preferable that all the transport means and a membrane to be washed, that is, a porous membrane to be washed be arranged so as not to be dipped in a washing tank.

In the washing apparatus 110, 210, 220, 310, 410, 420, or 430 illustrated in FIG. 1, 12, 10, 12, 14, 15, 17, 19A, or 20A, the cylindrical rotor 114b, 214b, 214d, 214j, 314b, or 414a is arranged so as not to be dipped in the recovery tank 115a, 215a, 315a, or 415a. It is preferable that the cylindrical rotor and the porous membrane 123, 213, 313, or 413 be not dipped in the washing solution of the recovery tank. Therefore, since the washing solution on the surface of the porous membrane is blown away by a centrifugal force generated when the cylindrical rotor and the porous membrane rotate. Therefore, the washing solution in contact with the surface of the porous membrane is replaced and it is avoidable that the washing solution is always retained. As a result, since the surface renewal of the porous membrane is promoted, the present invention has a superior washing efficiency.

The washing apparatus according to the present invention has the recovery tank, but the recovery tank is the tank for recovering the washing solution. That is, the washing apparatus according to the present invention has characteristics in that a washing tank for washing a porous membrane is not provided below a cylindrical rotor. Accordingly, the size of facilities can be reduced.

The washing tank described herein is the container in which a washing solution is stored, and the washing bath described herein is the gutter-shaped flow path through which a washing solution flows.

<Other Embodiments>

The washing apparatus according to the present invention is not limited to the washing apparatus 110, 210, 310, 410, or 510 illustrated in FIG. 1, 2, 10, 11, 14, 15, 17, 18. our 21.

For example, in the washing apparatus 110, 210, 310, 410, or 510, one porous membrane 113, 213, 313, 413, or 513 is transported. However, two or more porous membranes may be transported at once. In this case, it is preferable that the transporting directions of the porous membranes be the same.

In addition, in the washing apparatus 110, 210, 310, or 410, the washing solution 111, 211, 311, or 411 falls in a water column shape from one or plural discharge openings 112b, 212b, 312b, or 412b. However, the washing solution may fall, for example, in a band shape from slit-like discharge openings or may fall in the shower form from shower outlet holes.

In addition, it is not necessary that the discharge opening 112b, 212b, 312b, or 412b face immediately below. The discharge opening may face, for example, diagonally downward or sideways. When being discharged, the discharge direction of a washing solution is not particularly limited. Furthermore, when the washing solution falls in a band shape, a longitudinal direction of a cross-section of the slit-like discharge openings may be the same as or different from an axis direction of a cylindrical rotor.

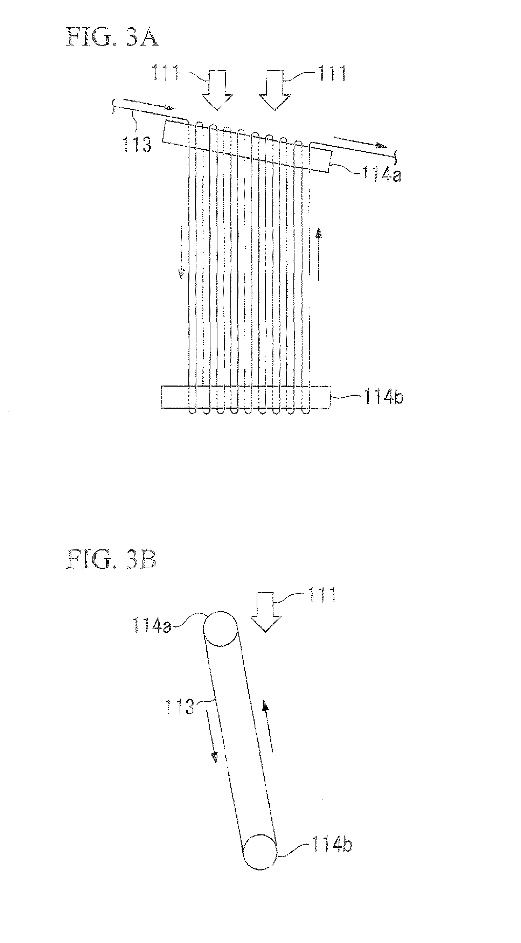

In addition, in the washing apparatus 110, the case in which the pair of upper and lower cylindrical rotors 114a and 114b, which are arranged such that axis directions thereof are horizontal, are provided has been described as an example of the transport means 114. The axis direction of the cylindrical rotor 114a or 114b may not be parallel as illustrated in FIG. 3A, or the cylindrical rotors 114a and 114b may be shifted back and forth such that a transporting direction of the porous membrane 313 is inclined with respect to the vertical direction as illustrated in FIG. 3B. At this time, the inclination angle range of the porous membrane 313 is preferably lower than or equal to 30° with respect to the vertical direction from the viewpoint of contact with the washing solution and is more preferably closer to the vertical direction, that is, closer to 0°.

Furthermore, in the transport means illustrated in FIG. 3A, the pair of upper and lower cylindrical rotors 114a and 114b are not parallel. That is, the cylindrical rotor 114b is horizontal and the cylindrical rotor 114a is not horizontal. However, the washing apparatus according to the present invention is not limited thereto. As illustrated in FIG. 14, the axis directions of the cylindrical rotors may not be parallel to each other in which, among the pair of upper and lower cylindrical rotors 314a and 314b, the upstream cylindrical rotor 314a is not horizontal and the downstream cylindrical rotor 314b is horizontal.

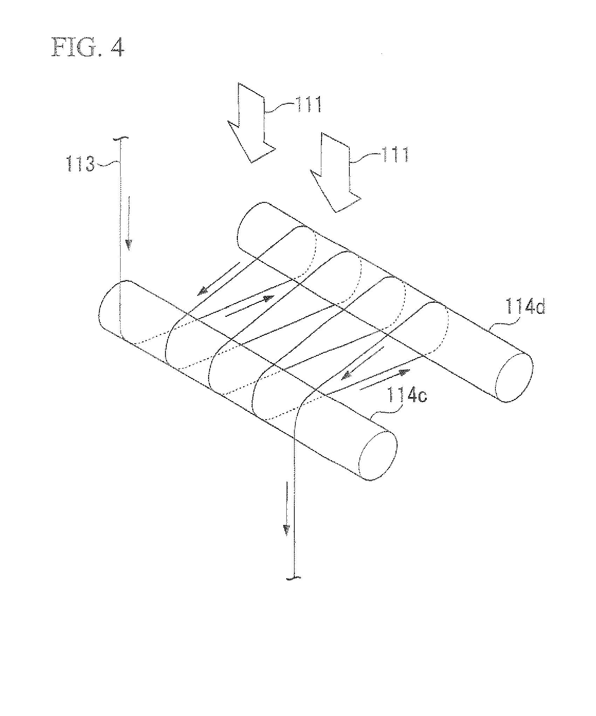

In addition, for example, as illustrated in FIG. 4, the transport means may include a pair of left and right cylindrical rotors 114c and 114d. In this case, a porous membrane 113 is transported in a direction perpendicular to the falling direction of the washing solution 111.

An axis direction of a cylindrical rotor 114c or 114d of FIG. 4 is horizontal. However, the axis direction is not limited thereto and may not be horizontal. In addition, the axis directions of the cylindrical rotors may or may not be parallel to each other.

In the embodiment, a so-called Nelson-type which includes a pair of cylindrical rotors as the transport means has been described as an example. However, the present invention is not limited thereto.

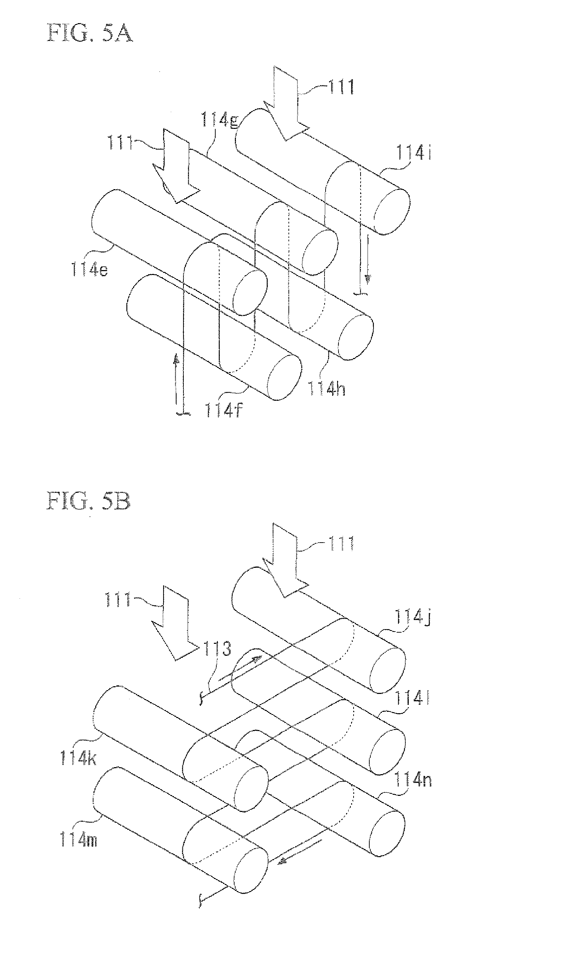

The transport means may be a so-called calendar type in which, for example, as illustrated in FIG. 5A or 5B, the porous membrane 113 is transported from an upstream cylindrical rotor to a downstream cylindrical rotor while reciprocating in a zigzag shape, that is, while being sequentially transported between the cylindrical rotors 114a to 114n. In such transport means, two or more cylindrical rotors 114e to 114n are alternately arranged.

"Being alternately arranged" described herein represents the state in which the cylindrical rotors 114f and 114h in a second row are positioned at pitches between the cylindrical rotors 114e, 114g, and 114i in a first row (FIG. 5A); or the state in which the cylindrical rotor 114k and 114m in a second row are positioned at pitches between the cylindrical rotors 114j, 114l, and 114n in a first row, that is, the state in which the cylindrical rotors are arranged in a zigzag shape (FIG. 5B).

In the transport means illustrated in FIG. 5A, the porous membrane 113 is transported in the same direction as or the opposite direction to the falling direction of the washing solution 111. On the other hand, in the transport means illustrated in FIG. 5B, the porous membrane 113 is transported in a direction perpendicular to the falling direction of the washing solution 111. In consideration of the contact between the washing solution 111 and the porous membrane 113, as illustrated in FIG. 5A, the transport means for transporting the porous membrane 113 in the same direction as or the opposite direction to the falling direction of the washing solution 111, is preferable.

In consideration of a reduction in the size of facilities, the Nelson-type transport means illustrated in FIG. 1 or 2 is preferable among various types of the transport means in which the porous membrane is transported in the same direction as or the opposite direction to the falling direction of the washing solution.

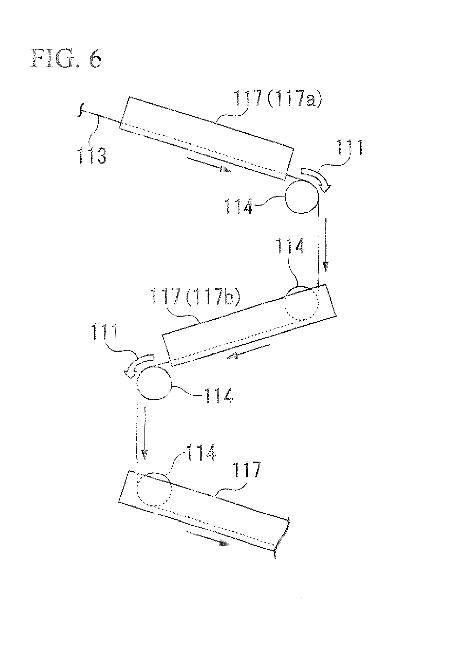

In addition, as illustrated in FIG. 6, the washing apparatus may include, for example, gutters 117 instead of the fall means and the recovery means. In this case, the washing solution 111 flowing through a first gutter 117a is discharged from an exit, falls, and is recovered by a second gutter 117b. Meanwhile, the porous membrane 113 which has passed through the first gutter 117a is transported in the vertical direction by the transport means 114 while being in contact with the falling washing solution 111. The porous membrane 113 is washed while passing through the first gutter 117a and while the washing solution 111 falls, and thus a material such as a solvent is removed. In particular, since the falling washing solution 111 does not receive the resistance of the gutters 117, the flow rate thereof is increased and thus the porous membrane 113 can be efficiently washed.

As illustrated in FIG. 6, three or more gutters 117 may be provided. In this case, the washing solution 111 recovered by the second gutter 117b is discharged from an exit thereof, falls, and is recovered by the next gutter 117. Therefore, one gutter (for example, the second gutter 117b) functions as both the fall means and the recovery means. However, as the number of the gutters 117 is increased, the size of facilities is increased. Therefore, it is preferable that the number of the gutters 117 be set in consideration of the washing property and an increase in the size of facilities.

In addition, in the washing apparatus 210, the case where the cylindrical rotors 214a to 214e, which are arranged such that axis directions are horizontal and parallel to each other, are provided has been described as an example of the transport means 214. The axis directions of these cylindrical rotors 214a to 214e may not be horizontal and may not be parallel to each other.

Furthermore, the transport means 214 of the washing apparatus 210 includes the cylindrical rotors 214a to 214e which are horizontally arranged in two rows. The cylindrical rotors 214a to 214e may not be arranged in two rows as long as the cylindrical rotors are alternately arranged and the porous membrane can move while reciprocating therebetween, that is, as long as the porous membrane can move while being sequentially transported to reciprocate between the cylindrical rotors.

In addition, for example, as in the case of a washing apparatus 220 illustrated in FIG. 12 or 13, cylindrical rotors 214f to 214j, which are vertically arranged in two rows, may be provided as the transport means 214.

In the transport means 214 illustrated in FIG. 12 or 13, the porous membrane 213 is transported in a direction perpendicular to the falling direction of the washing solution 211. When the porous membrane 213 is transported in the direction perpendicular to the falling direction of the washing solution 211, the washing solution 211 is easily separated from the porous membrane 213 and thus the washing efficiency is improved by water draining.

However, in consideration of the contact between the washing solution and the porous membrane, as illustrated in FIG. 10 or 11, the transport means for transporting the porous membrane 213 in the same direction as or the opposite direction to the falling direction of the washing solution 211, is preferable.

In addition, in the washing apparatus 310, as illustrated in FIG. 15, the case where the second cylindrical rotor 314b is arranged immediately below the first cylindrical rotor 314a has been described as an example of the transport means 314. However, as long as the axis directions thereof are not parallel to each other, the cylindrical rotors 314a and 314b may be shifted back and forth as illustrated in FIG. 16 such that a transporting direction of the porous membrane 313 is inclined with respect to the vertical direction within an angle range in which the washing solution flowing the surface of the porous membrane is not separated from the membrane surface. At this time, the inclination angle range of the porous membrane 313 is preferably lower than or equal to 30° with respect to the vertical direction from the viewpoint of contact with the washing solution and is more preferably closer to the vertical direction, that is, closer to 0°.

In addition, in the washing apparatus 310 illustrated in FIG. 14 or 15, the porous membrane 313 contacts with the washing solution 311 at both times when moving from the first cylindrical rotor 314a to the second cylindrical rotor 314b and when moving from the second cylindrical rotor 314b to the first cylindrical rotor 314a. However, the contact time between the porous membrane 313 and the washing solution 311 is not limited thereto. For example, the porous membrane 313 may contact with the washing solution 311 only when moving from the first cylindrical rotor 314a to the second cylindrical rotor 314b. Conversely, the porous membrane 313 may contact with the washing solution 311 only when moving from the second cylindrical rotor 314b to the first cylindrical rotor 314a.

In addition, in the washing apparatus 410, the case where the cylindrical rotors 414a and 414a, of which axis directions are horizontal and parallel to each other, are provided has been described as an example of the transport means 414. However, the axis direction of the cylindrical rotors 414a or 414a may not be horizontal, or the axis directions may not be parallel to each other.

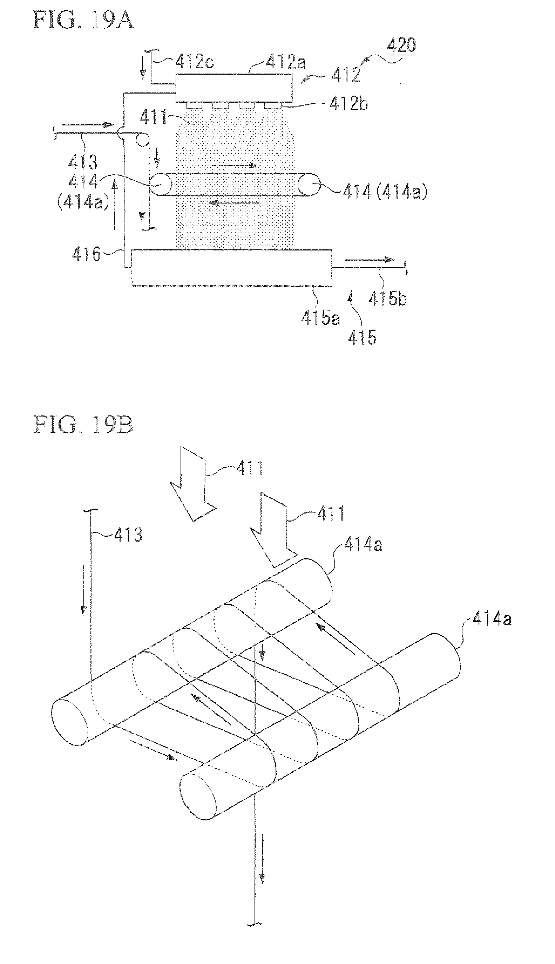

Furthermore, in the washing apparatus 410, an arrangement direction of the discharge openings 412b of the fall means 412 is the same as the axis directions of the cylindrical rotors 414a and 414a of the transport means 414. However, both directions may be different from each other, for example, as illustrated in FIG. 19A or 19B. As described above, the same shall be applied to the case where the washing solution falls in a band shape. A longitudinal direction of a cross-section of slit-like discharge openings may be the same as or different from an axis direction of a cylindrical rotor. In a washing apparatus 420 illustrated in FIG. 19A or 19B, the axis direction of the cylindrical rotor 414a or 414a is perpendicular to the arrangement direction of the discharge openings 412b.

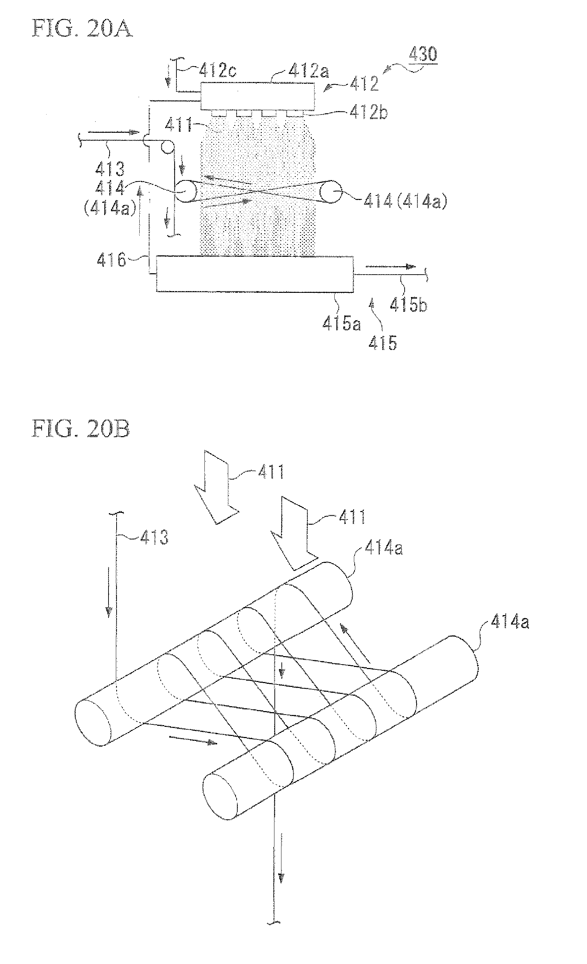

In addition, in the above-described washing apparatus 410 or 420, the porous membrane 413 is transported such that the falling direction of the washing solution 411 intersects with the transporting direction of the porous membrane 413 in a cross shape. However, for example, as illustrated in FIG. 20A or 20B, the porous membrane 413 may be transported such that the falling direction of the washing solution 411 intersects with the transporting direction of the porous membrane 413 in a diagonal shape. When the porous membrane 413 is transported such that the falling direction of the washing solution 411 intersects with the transporting direction of the porous membrane 413 in a diagonal shape, the porous membrane 413 is easily tightly wound around the cylindrical rotor 414a or 414a and thus the porous membrane 413 can be stably transported. Accordingly, a larger amount of the washing solution 411 can contact with the porous membrane 413. The reason is considered to be as follows.

When the porous membrane is transported such that the falling direction of the washing solution intersects with the transporting direction of the porous membrane in a diagonal shape, the porous membrane intersects with itself between the cylindrical rotors (refer to FIG. 20A or 20B). Therefore, the porous membrane tightens the cylindrical rotors and thus it is difficult for the porous membrane to be removed from the cylindrical rotors. In addition, since the length of contact portions between the cylindrical rotors and the porous membrane is increased, a large amount of tension can be applied to the porous membrane. Accordingly, the porous membrane is easily tightly wound around the cylindrical rotors and thus the transporting stability of the porous membrane is improved.

In particular, for example, in a case where the bend radius of the porous membrane is large (the membrane is rigid), when the porous membrane intersects with itself between the cylindrical rotors (that is, when the porous membrane intersects with itself and is wound around the cylindrical rotors), a tension is easily applied to the porous membrane and thus the porous membrane can be stably transported.

In a washing apparatus 430 illustrated in FIG. 20A or 20B, the case where the cylindrical rotors 414a and 414a, of which axis directions are horizontal and parallel to each other, are provided has been described as an example of the transport means 414. However, the axis directions of the cylindrical rotors 414a and 414a may not be horizontal and may not be parallel to each other. In addition, the arrangement direction of the discharge openings 412b of the fall means 412 may be the same as the axis directions of the cylindrical rotors 414a and 414a of the transport means 414.

In addition, in the washing apparatus 510, the porous membrane 513 passes through the respective flow paths 512b. However, as long as the porous membrane 513 is in contact with the falling washing solution 511 at the fall portions F, the porous membrane 513 may not pass through the respective flow paths 512b.

Furthermore, in the washing apparatus 510, the porous membrane 513 is transported in the same direction as the falling direction of the washing solution 511. However, the porous membrane 513 may be transported in the opposite direction to the falling direction of the washing solution 511. That is, for example in the washing apparatus 510 illustrated in FIG. 21, the transport direction of the porous membrane 513 may be reversed and the porous membrane 513 is transported so as to move up through the flow path 512b. In this case, due to the transporting rate of the porous membrane and the flow rate of the washing solution, the surface renewal of the porous membrane by the washing solution is further promoted. In addition, as the solvent concentration of a liquid included in the porous membrane is reduced, the solvent concentration of the washing solution to be used is also reduced, which is effective for washing efficiency. Furthermore, a material such as a solvent, which is removed from the porous membrane, can be condensed by the washing solution and can be treated as a high-concentration waste liquid, which is effective from the viewpoint of cost.

In addition, in the washing apparatus 510, the pair of upper and lower cylindrical rotors 5141a and 5141a are arranged such that axis directions thereof are horizontal and the same. However, as long as the transporting direction of the porous membrane 513 can be restricted to be the same as or opposite to the falling direction of the washing solution 511 at the fall portions F, the axis directions of the pair of upper and lower cylindrical rotors 5141a and 5141a may not face the same direction, for example, as illustrated in FIG. 22.

In addition, the number of the cylindrical rotors 5141a provided at the fall portions F is not limited to one pair (two) of upper and lower cylindrical rotors for each portion. The number may be three, for example, as illustrated in FIG.

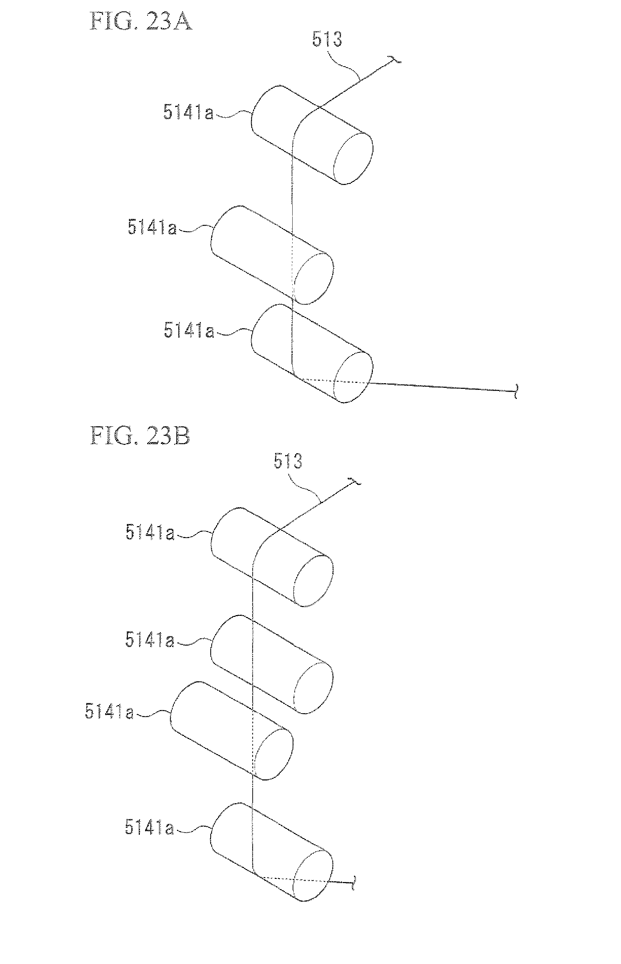

23A; may be four, for example, as illustrated in FIG. 23B; or may be more than 4.

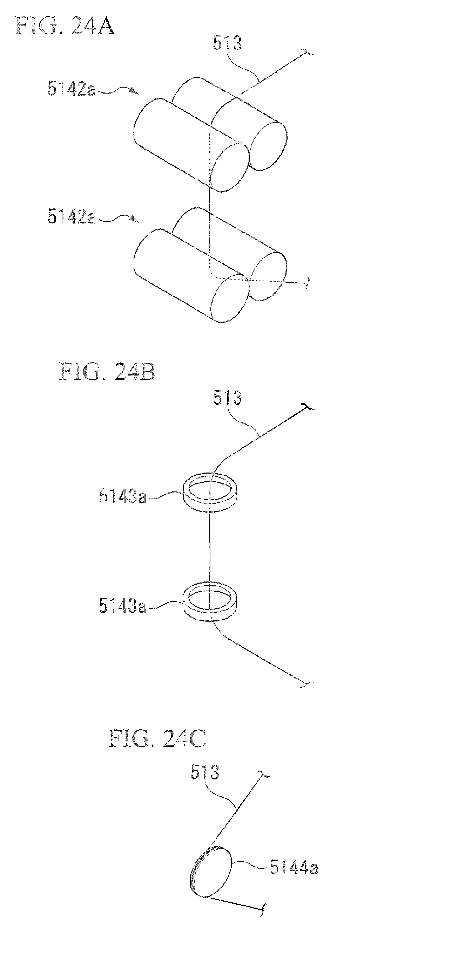

Furthermore, the transport means 514 of the washing apparatus 510 illustrated in FIG. 21 includes the pair of upper and lower cylindrical rotors 5141a and 5141a as the guide member 514a. However, the guide member 514a is not limited to the pair of upper and lower cylindrical rotors 5141a and 5141a. As the guide member 514a, for example, as illustrated in FIG. 24A, a pair of upper and lower nip rolls 5142a and 5142a may be provided; as illustrated in FIG. 24B, a pair of upper and lower ring-shaped guides 5143a and 5143a may be provided; or as illustrated in FIG. 24C, a disk-shaped guide 5144a in which a groove is formed in a circumferential surface may be provided. However, the cylindrical rotors 5141a illustrated in FIGS. 21 to 23B are preferable from the viewpoints of preventing the porous membrane 13 from being scratched by the friction with the guide member 514a and of stably transporting the porous membrane 13. When the nip rolls 5142a illustrated in FIG. 24A or the ring-shaped guides 5143a illustrated in FIG. 24B are used as the guide member 514a, the number thereof is not limited to one pair (two) of upper and lower units for each fall portion F, and may be 3 or more.

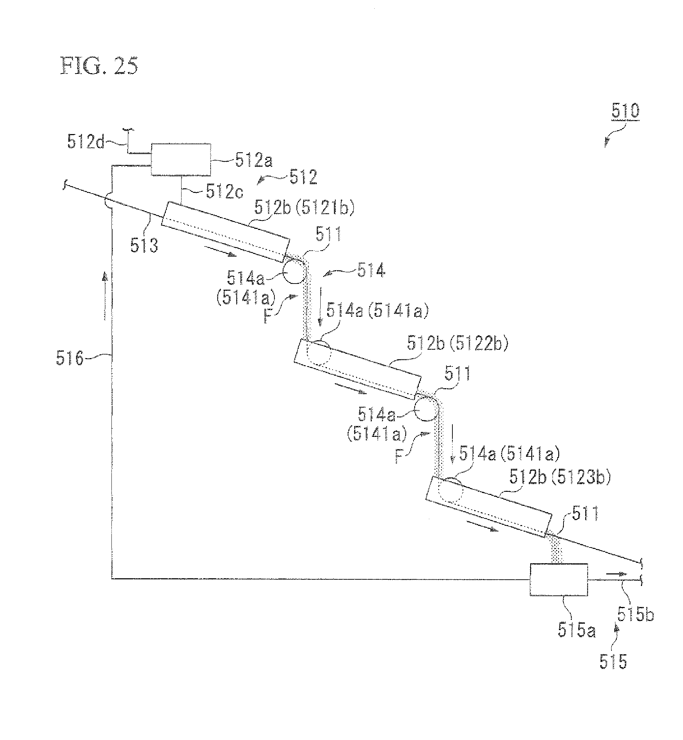

In addition, in the washing apparatus 510, the two or more flow paths 512b are arranged in a zigzag shape. However, as long as the washing solution 511 sequentially falls and moves from one flow path 512b to another flow path 512b, the respective flow paths 512b may be arranged to be inclined in the same direction as illustrated in FIG. 25. In this case, the porous membrane 513 moves from one to the other of the pair of the upper and lower cylindrical rotors 5141a and 5141a so as to be obliquely wound therearound.

However, when the two or more flow paths 512b are arranged in a zigzag shape as illustrated in FIG. 21, the size of the apparatus can be further reduced.

[Method of Producing Porous Membrane]

A method of producing a porous membrane according to the present invention includes a coagulation step of coagulating a membrane-forming raw material solution, which contains a hydrophobic polymer, a hydrophilic polymer, and a solvent, in a coagulating solution to form a porous membrane; a washing step of washing the porous membrane to remove material such as a solvent remaining in the porous membrane; and a removal step of removing a hydrophilic polymer remaining in the porous membrane. In addition, the method of producing a porous membrane further includes a drying step of drying the porous membrane after the removal step.

<Coagulation Step>

In the method of producing a porous membrane, first, a membrane-forming raw material solution containing a hydrophobic polymer, a hydrophilic polymer, and a solvent is prepared. Next, normally, this membrane-forming raw material solution is discharged into a coagulating solution from a nozzle in which a circular discharge opening is formed; and is coagulated in the coagulating solution to form a porous membrane.

As the hydrophobic polymer, a material capable of forming a porous membrane in the coagulation step may be used. Such a material can be used without any particular limitation, and examples thereof include polysulfone resin such as polysulfone or polyether sulfone, fluororesin such as polyvinylidene fluoride, polyacrylonitrile, cellulose derivatives, polyamide, polyester, polymethacrylate, and polyacrylate. In addition, copolymers of the above-described resins may be used, or those obtained by introducing a substituent into a part of the above-described resins and copolymers thereof can be used. In addition, the same kind of polymers having different molecular weights or the like may be blended for use, or two or more kinds of resins may be mixed for use.

Among these, fluororesin, specifically, polyvinylidene fluoride or copolymers composed of a vinylidene fluoride monomer and other monomers have superior resistance to an oxidant such as hypochlorous acid.

Accordingly, when a porous membrane treated with an oxidant is produced in, for example, a hydrophilic polymer removal step described below, it is preferable that fluororesin be selected as the hydrophobic polymer.

The hydrophilic polymer is a material which is added in order to adjust the viscosity of the membrane-forming raw material to a range suitable for the formation of a porous membrane and to stabilize the membrane-forming state, and polyethylene glycol or polyvinyl pyrrolidone is preferably used. Among these, polyvinyl pyrrolidone or copolymers obtained by copolymerization of polyvinyl pyrrolidone with other monomers are preferable from the viewpoints of the pore size control of a porous membrane and the strength of a porous membrane.

In addition, as the hydrophilic polymer, two or more kinds of resins can be mixed for use. For example, when a material having a higher molecular weight is used as the hydrophilic polymer, there is a tendency that a polymer having a satisfactory membrane structure is easily formed. Meanwhile, a hydrophilic polymer having a lower molecular weight is preferable from the viewpoint of being easily removed from a porous membrane in a hydrophilic polymer removal step described below. Therefore, according to the purpose, the same kind of hydrophilic polymers having different molecular weights may be appropriately blended for use.

The membrane-forming raw material solution can be prepared by mixing the above-described hydrophobic polymer and hydrophilic polymer with a solvent (good solvent) in which the polymers are soluble. As desired, other additive components may be added to the membrane-forming raw material solution.

The kind of the solvent is not particularly limited, but it is preferable that a solvent which is easily uniformly mixed with water be selected because, when the coagulation step is performed using a dry-wet spinning method, the moisture of the membrane-forming raw material solution is absorbed in a free-running portion to adjust the pore size of the porous membrane. Examples of such a solvent include N-N-dimethylformamide, N-N-dimethylacetamide, dimethyl sulfoxide, N-methyl-2-pyrrolidone, or N-methylmorpholine-N-oxide. Among these, one or more kinds can be used. In addition, a poor solvent of the hydrophobic polymer and the hydrophilic polymer may be mixed therewith for use within a range not departing the solubility of the hydrophobic polymer and the hydrophilic polymer in the solvent.

The temperature of the membrane-forming raw material solution is not particularly limited, and is normally 20°C to 40°C.

Regarding the concentration of the hydrophobic polymer in the membrane-forming raw material solution, the lower limit thereof is preferably 10% by mass and more preferably 15% by mass because there is a tendency that, when the concentration is too low or too high, the stability during membrane formation deteriorates and it is difficult to form a satisfactory porous membrane structure. In addition, the upper limit is preferably 30% by mass and more preferably 25% by mass.

On the other hand, the lower limit of the concentration of the hydrophilic polymer is preferably 1% by mass and more preferably 5% by mass because a porous membrane is more easily formed. The upper limit of the concentration of the hydrophilic polymer is preferably 20% by mass and more preferably 12% by mass from the viewpoint of the handleability of the membrane-forming raw material solution.

The membrane-forming raw material solution prepared as above is discharged from a discharge nozzle or the like and is dipped in a coagulating solution. As a result, the hydrophobic polymer is coagulated and a porous hollow fiber membrane composed of the hydrophobic polymer and the hydrophilic polymer is obtained. In this case, it is presumed that the hydrophilic polymer is three-dimensionally intertwined with the hydrophobic polymer in the gel state.

Until the porous membrane is transported into a coagulation tank filled with the coagulating solution after discharging, a free-running section may be provided (dry-wet spinning method) or may not be provided (wet spinning method).

It is necessary that the coagulating solution used herein be a non-solvent of the hydrophobic polymer and be a good solvent of the hydrophilic polymer, and examples of the coagulating solution include water, ethanol, methanol, and mixtures thereof. Among these, a mixed solution of the solvent used in the membrane-forming raw material solution with water is preferable from the viewpoint of safety or operation control.

In addition, the discharge nozzle used herein can be selected according to the form of a porous membrane. For example, when an apparatus having a circular nozzle is used, a hollow fiber membrane can be produced as a porous membrane. The form of the porous membrane produced in the present invention may be a flat membrane as well as a hollow membrane and is not particularly limited. However, particularly in a water treatment, a hollow fiber membrane is preferably used.

The form of the porous membrane produced in the present invention may be a flat membrane as well as a hollow membrane and is not particularly limited.

In addition, when it is desired that the strength of a porous membrane is further improved, a reinforcement support can be disposed inside the porous membrane.

Examples of the reinforcement support include hollow cords knitted or braided with various kinds of fibers; and hollow fiber membranes. Various kinds of materials can be used alone or in combination.

When a hollow fiber membrane is produced, examples of the reinforcement support include hollow cords knitted or braided with various kinds of fibers. Various kinds of materials can be used alone or in combination. Examples of a fiber used for hollow knitted or raided cords include synthetic fiber, semisynthetic fiber, regenerated fiber, and natural fiber. In addition, the form of the fiber may be monofilament, multifilament, or spun yarn.

Meanwhile, when a flat membrane is produced, woven fabric, non-woven fabric, or net can be used. In either case where a hollow fiber membrane or a flat membrane is produced, when the reinforcement support is used, the membrane-forming raw material solution is applied from a nozzle onto a surface of the reinforcement raw material solution and the resultant is put into the coagulating solution. When a hollow fiber membrane is produced, a circular complex spinning nozzle is used to apply the membrane-forming raw material solution onto the surface of the reinforcement support in the nozzle and the resultant is directly discharged to the coagulating solution.

When the membrane-forming raw material solution is discharged (put) into the coagulating solution, the coagulating solution is diffused in the membrane-forming raw material solution. Accordingly, phase separation occurs in the hydrophobic polymer and the hydrophilic polymer, respectively. Along with the progress of such phase separation, the coagulation advances. As a result, a porous membrane having a three-dimensional network structure is obtained in which the hydrophobic polymer and the hydrophilic polymer are intertwined with each other. When the phase separation stops, the process proceeds to the washing step which is the next step.

The porous membrane formed in the above-described coagulation step generally has a large pore size and potentially has high water permeability. However, in the porous membrane, a large amount of material such as a hydrophilic polymer or a solvent in the solution state remains. In particular, when a hydrophilic polymer remains in the membrane, sufficiently high water permeability cannot be exhibited. In addition, when a hydrophilic polymer is dried and coagulated in the membrane, the mechanical strength of the membrane may deteriorate. Therefore, after the coagulation step, a step of removing a hydrophilic polymer remaining in the porous membrane is performed.

Specifically, in the hydrophilic polymer removal step, the hydrophilic polymer is subjected to oxidative decomposition (is converted into a low-molecular-weight polymer) using an oxidant described below. However, when a solvent remains in the porous membrane, the solvent reacts with the oxidant, which inhibits the oxidative decomposition of the hydrophilic polymer.

Therefore, before the hydrophilic polymer removal step, a step (washing step) of washing the porous membrane to remove material such as a solvent remaining in the porous membrane is performed.

In the washing step according to the first embodiment of the present invention, using the washing apparatus 110 according to the present invention illustrated in FIG 1 or 2, the porous membrane 113 is transported so as to contact with the falling washing solution 111, that is, the washing solution 111 falling in the vertical direction.

A method of causing the washing solution 111 to fall from the fall means 112 is not particularly limited. The washing solution 111 may be caused to free-fall from the discharge openings 112b due to its weight, or may be caused to fall by the action of an external force using a pump or the like (not illustrated).

By transporting the porous membrane 113 so as to contact with the falling washing solution 111, the washing solution 111 flows and falls from the membrane surface while being in contact with the porous membrane 113. Accordingly, a material such as a solvent in the porous membrane is diffused and transferred from the inside of the membrane to the membrane surface; and the material is further diffused and transferred from the membrane surface to the washing solution 111 and is removed from the porous membrane.

When the porous membrane 113 is in contact with the falling washing solution 111, the washing solution 111 is not in contact with means for transporting a liquid such as a gutter. In the washing step, when the porous membrane 113 is arranged so as to be in contact with the falling washing solution 111, it is sufficient that a portion, which is arranged such that the washing solution 111 is not in contact with the means for transporting a liquid such as a gutter, be included. In the other portions, when the porous membrane 113 is in contact with the washing solution 111, the washing solution 111 may be in contact with the means for transporting a liquid such as a gutter.

In the washing step, as illustrated in FIG. 1, 2, 3A, 5A, or 6, it is preferable that the porous membrane 113 be transported parallel to the falling direction of the washing solution 111. That is, it is preferable that the porous membrane 113 be transported in the same direction as and/or the opposite direction to the falling direction of the washing solution 111. As a result, the washing solution 111 uniformly and sufficiently contacts with the porous membrane 113. Therefore, the porous membrane 113 is more efficiently washed and a material such as a solvent present in the porous membrane 113 is easily removed.

However, in the washing step, "parallel" described in the case where the porous membrane 113 is transported parallel to the falling direction of the washing solution 111 does not represent being perfectly parallel. For example, when the washing solution 111 falls downward, it is sufficient that the porous membrane 113 be also transported downward and/or in the opposite direction thereto, in practice, in the same direction as and/or the opposite direction to the falling direction of the washing solution 111.

In the washing step, as illustrated in FIGS. 1 to 4, it is preferable that the porous membrane move in axis directions of a pair of cylindrical rotors while reciprocating between the pair of cylindrical rotors. As a result, the size of facilities can be further reduced.

In the washing step, it is preferable that the porous membrane be transported so as to contact with the washing solution at a high angle. The angle of the washing solution with respect to the porous membrane is preferably 45° to 90°. By transporting the porous membrane so as to contact with the washing solution at a high angle, the water draining and fluid film removal on the surface of the porous membrane are easily performed, the porous membrane is more efficiently washed, and a material such as a solvent present in the porous membrane is easily removed.

In the washing step, it is preferable that the fall of the washing solution in the vertical direction be a free fall. The free fall of the washing solution represents the washing solution falls under conditions that there are no external force other than gravity.

That is, in the washing step according to the present invention, the porous membrane contacts with the washing solution falling in the vertical direction without washing means using a washing bath such as a gutter, thereby removing a material remaining in the porous membrane and washing the porous membrane. As a result, since the replacement (surface renewal) of the washing solution in contact with the surface of the porous membrane is promoted, the washing effect is improved.

It is preferable that the washing step include transporting the porous membrane in the same direction as or the opposite direction to the falling direction of the washing solution; and in the washing step, when a transporting rate of the porous membrane is represented by V1 and an average movement rate of the washing solution is represented by v2, v2/V1 be higher than or equal to 1. As a result, the porous membrane can contact with the washing solution which free-falls in the vertical direction at a rate higher than the transporting rate of the porous membrane. Accordingly, since the replacement (surface renewal) of the washing solution in contact with the surface of the porous membrane is promoted, the washing effect is improved.

The v2/V1 is preferably higher than or equal to 1, more preferably higher than or equal to 2, still more preferably higher than or equal to 3, and particularly preferably higher than or equal to 5.

The v2 is calculated according to the following expression (I) in which v0 represents the falling rate of the washing solution at a contact start point when the washing solution starts to contact with the porous membrane; and v1 represents the falling rate of the washing solution at a separation point when the washing solution is separated from the porous membrane.

$$v2=(v0+v1)/2 \quad \ldots \quad (I)$$

It is preferable that the washing step include transporting the porous membrane in the same direction as the falling direction of the washing solution; and in the washing step, when a transporting rate of the porous membrane is represented by V1 and an average movement rate of the washing solution is represented by v2, v2/V1 is higher than or equal to 2. As a result, the porous membrane can contact with the washing solution which free-falls in the vertical direction at a rate higher than the transporting rate of the porous membrane. Accordingly, since the replacement (surface renewal) of the washing solution in contact with the surface of the porous membrane is promoted, the washing effect is improved.

The v2/V1 is preferably higher than or equal to 2, more preferably higher than or equal to 2.5, and still more preferably higher than or equal to 3.

It is preferable that the washing step include transporting the porous membrane in the opposite direction to the falling direction of the washing solution; and in the washing step, when a transporting rate of the porous membrane is represented by V1 and an average movement rate of the washing solution is represented by v2, v2/V1 is higher than 0. As a result, the porous membrane can contact with the washing solution which free-falls in the vertical direction at a rate higher than the transporting rate of the porous membrane. Accordingly, since the replacement (surface renewal) of the washing solution in contact with the surface of the porous membrane is promoted, the washing effect is improved.

The v2/V1 is preferably higher than 0, more preferably higher than or equal to 0.5, and still more preferably higher than or equal to 1.

In the washing step, it is preferable that the porous membrane contact with the washing solution two times or more. As a result, the washing solution is sufficiently in contact with the porous membrane and the porous membrane can be more effectively washed.

In the washing step, it is preferable that the washing solution contact with the porous membrane such that at least a part of the washing solution has a free surface. As a result, since it is difficult for the washing solution to receive a resistance, the flow rate of the washing solution is increased compared to the method in which a porous membrane is washed while causing a washing solution to flow using a washing bath such as a gutter and thus the washing efficiency is improved. Furthermore, since the porous membrane can be washed without using a washing bath, large facilities are not required and the cost is low.

In the washing step according to the second embodiment of the present invention, using the washing apparatus 210 illustrated in FIG. 10 or 11, the porous membrane 213 is transported parallel to the falling direction of the washing solution 211 so as to contact with the falling washing solution 211.

However, in the second embodiment of the present invention, "parallel" described in the case where the porous membrane 213 is transported parallel to the falling direction of the washing solution 211 does not represent being perfectly parallel. For example, when the washing solution 211 falls downward, it is sufficient that the porous membrane 213 be also transported downward and/or in the opposite direction thereto, in practice, in the same direction as and the opposite direction to the falling direction of the washing solution 211.

That is, the porous membrane 213 is transported in the same direction as and the opposite direction to the falling direction of the washing solution 211.

A method of causing the washing solution 211 to fall from the fall means 212 is not particularly limited. The washing solution 211 may be caused to free-fall from the discharge openings 212b due to its weight, or may be caused to fall by the action of an external force using a pump or the like (not illustrated).

By transporting the porous membrane 213 so as to contact with the falling washing solution 211, the washing solution 211 flows and fall from the membrane surface while being in contact with the porous membrane 213. Accordingly, a material such as a solvent in the porous membrane 213 is diffused and transferred from the inside of the membrane to the membrane surface; and the material is further diffused and transferred from the membrane surface to the washing solution 211 and is removed from the porous membrane.

When the porous membrane 213 is in contact with the falling washing solution 211, the washing solution 211 is not in contact with means for transporting a liquid such as a gutter. In this washing step, when the porous membrane 213 is arranged so as to be in contact with the falling washing solution 211, it is sufficient that a portion, which is arranged such that the washing solution 211 is not in contact with the means for transporting a liquid such as a gutter, be included. In the other portions, when the porous membrane 213 is in contact with the washing solution 211, the washing solution 211 may be in contact with the means for transporting a liquid such as a gutter.

In addition, in the washing step, the porous membrane 213 moves from the upstream cylindrical rotor 214a to the downstream cylindrical rotor 214e while reciprocating between two or more cylindrical rotors 214a to 214e which are alternately arranged, that is, while being sequentially transported between the two or more cylindrical rotors 214a to 214e. As a result, this configuration is preferable for a case where two or more porous membranes are transported and washed (polypyramidal) and can reduce the size of facilities.

Furthermore, as illustrated in FIG. 10 or 11, when the porous membrane 213 is transported in the same direction as or the opposite direction to the falling direction of the washing solution 211, the washing solution 211 uniformly and sufficiently contacts with the porous membrane 213. Therefore, the porous membrane 213 is more efficiently washed and a material such as a solvent present in the porous membrane 213 is easily removed.

In the washing step according to the third embodiment of the present invention, using the washing apparatus 310 illustrated in FIG. 14 or 15, the porous membrane 313 is transported parallel to the falling direction of the washing solution 311 so as to contact with the falling washing solution 311.

However, in the third embodiment of the present invention, "parallel" described in the case where the porous membrane 313 is transported parallel to the falling direction of the washing solution 311 does not represent being perfectly parallel. For example when the washing solution 311 falls downward, it is sufficient that the porous membrane 313 be also transported downward, in practice, in the same direction as and the opposite direction to the falling direction of the washing solution 311.

That is, the porous membrane 313 is transported in the same direction as and the opposite direction to the falling direction of the washing solution 311.

A method of causing the washing solution 311 to fall from the fall means 312 is not particularly limited. The washing solution 311 may be caused to free-fall from the discharge openings 312b due to its weight, or may be caused to fall by the action of an external force using a pump or the like (not illustrated).

By transporting the porous membrane 313 in the same direction as or the opposite direction to the falling direction of the washing solution 311 so as to contact with the falling washing solution 311, the washing solution 311 flows and falls from the membrane surface while being in contact with the porous membrane 313. Accordingly, a material such as a solvent in the porous membrane 313 is diffused and transferred from the inside of the membrane to the membrane surface; and the material is further diffused and transferred from the membrane surface to the washing solution 311 and is removed from the porous membrane.

When the porous membrane 313 is in contact with the falling washing solution 311, the washing solution 311 is not in contact with means for transporting a liquid such as a gutter. In this washing step, when the porous membrane 313 is arranged so as to be in contact with the falling washing solution 311, it is sufficient that a portion, which is arranged such that the washing solution 311 is not in contact with the means for transporting a liquid such as a gutter, be included. In the other portions, when the porous membrane 313 is in contact with the washing solution 311, the washing solution 311 may be in contact with the means for transporting a liquid such as a gutter.

Furthermore, in the washing step, by transporting the porous membrane 313 in the same direction as or the opposite direction to the falling direction of the washing solution 311, the washing solution 311 uniformly and sufficiently contacts with the porous membrane 313. Therefore, the porous membrane 313 is efficiently washed and a material such as a solvent present in the porous membrane 313 is easily removed.

Furthermore, in the washing step, the porous membrane 313 moves in an axis direction of the cylindrical rotors 314a or 314b while being transported to reciprocate between the pair of cylindrical rotors 314a and 314b. As a result, the size of facilities can be reduced. In addition, when the porous membrane 313 moves, the axis directions of the pair of cylindrical rotors 314a and 314b are not parallel to each other in the same plane. Therefore, the central axes of the two cylindrical rotors 314a and 314b are inclined from a parallel plane by a predetermined angle. As described above, since the porous membrane 313 is in contact with the cylindrical rotor 314a or 314b at an angle perpendicular to each central axis thereof, the porous membrane 313 can move in the axis direction thereof at regular intervals (pitches) without reciprocating at the same place between the cylindrical rotors 314a and 314b. Therefore, it is not necessary that a cylindrical rotor in which a restricting groove is formed be used. In addition, even when cylindrical rotors having a flat circumferential surface are used, a porous membrane can move in the axis direction thereof at regular pitches by transporting the porous membrane to reciprocate between the cylindrical rotors.

In the washing step according to the fourth embodiment of the present invention, using the washing apparatus 410 illustrated in FIG. 17 or 18, the porous membrane 413 is transported so as to contact with the falling washing solution 411 and such that the falling direction of the washing solution 411 intersects with the transporting direction of the porous membrane 413.

A method of causing the washing solution 411 to fall from the fall means 412 is not particularly limited. The washing solution 411 may be caused to free-fall from the discharge openings 412b due to its weight, or may be caused to fall by the action of an external force using a pump or the like (not illustrated).

By transporting the porous membrane 413 so as to contact with the falling washing solution 411, the washing solution 411 flows and falls from the membrane surface while being in contact with the porous membrane 413. Accordingly, a material such as a solvent in the porous membrane 413 is diffused and transferred from the inside of the membrane to the membrane surface; and the material is further diffused and transferred from the membrane surface to the washing solution 411 and is removed from the porous membrane.

When the porous membrane 413 is in contact with the falling washing solution 411, the washing solution 411 is not in contact with means for transporting a liquid such as a gutter. In this washing step, when the porous membrane 413 is arranged so as to be in contact with the falling washing solution 411, it is sufficient that a portion, which is arranged such that the washing solution 411 is not in contact with the means for transporting a liquid such as a gutter, be included. In the other portions, when the porous membrane 413 is in contact with the washing solution 411, the washing solution 411 may be in contact with the means for transporting a liquid such as a gutter.

In addition, in the washing step, the porous membrane 413 is transported such that the falling direction of the washing solution 411 intersects with the transporting direction of the porous membrane 413. As a result, the washing solution 411 is easily separated from the surface of the porous membrane 413 and thus the washing efficiency is improved.

Furthermore, in the washing step, the porous membrane 413 moves in the axis direction of the cylindrical rotor 414a or 414a while being transported to reciprocate between the pair of cylindrical rotors 414a and 414a. As a result, the size of facilities is reduced, the fresh washing solution 411 can contact with not only a single surface of the porous membrane 413 but also the opposite surface thereof, and thus the washing efficiency is improved.

In the washing step according to the fifth embodiment of the present invention, for example, using the washing apparatus 510 illustrated in FIG. 21, the porous membrane 513 is transported in the same direction as the falling direction of the washing solution 511 by the guide member 514a (the pair of upper and lower cylindrical rotors 5141a and 5141a in the case of the washing apparatus 510 illustrated in FIG. 21), which is provided at the fall portions F and restricts the transporting of the porous membrane, such that the porous membrane 513 contacts with the washing solution 511 sequentially falling and moving from one flow path 512b to another flow path 512b of the two or more flow paths 512b which are arranged in a zigzag shape.

The movements of the washing solution 511 and the porous membrane 513 in the washing apparatus 510 are as follows.

The washing solution 511 supplied from the storage tank 512a flows through the inside of the first flow path 5121b, falls from an end of the flow path 5121b, and moves to the second flow path 5122b. The washing solution 511 moved to the second flow path 5122b flows through the inside of the flow path 5122b, falls from an end of the flow path 5122b, and moves to the third flow path 5123b. The washing solution 511 moved to the third flow path 5123b flows through the inside of the flow path 5123b, is discharged from an end of the flow path 5123b, and is recovered to the recovery tank 515a described below of the recovery means 515.

Meanwhile, the porous membrane 513 which has passed through the first flow path 5121b contacts with the falling washing solution 511 at the fall portion F between the first flow path 5121b and the second flow path 5122b; is transported while moving from one (upstream) to the other (downstream) of the pair of upper and lower cylindrical rotors 5141a and 5141a (that is, while moving in the same direction as the falling direction of the washing solution 511); and is guided to the second flow path 5122b. The porous membrane 513 guided to the second flow path 5122b passes through the flow path 5121b; contacts with the falling washing solution 511 at the fall portion F between the second flow path 5122b and the third flow path 5123b; is transported while moving from one (upstream) to the other (downstream) of the pair of upper and lower cylindrical rotors 5141a and 5141a; and is guided to the third flow path 5123b.

In the washing step, the porous membrane 513 is washed while passing through the flow path 512b and being in contact with the falling washing solution at the washing portions F. In particular, the porous membrane 513 is transported so as to contact with the falling washing solution 511 at the fall portions F. As a result, the washing solution 511 washes a surface of the porous membrane 513 while being in contact therewith. Accordingly, a material such as a solvent in the porous membrane 513 is diffused and transferred from the inside of the membrane to the membrane surface; and the material is further diffused and transferred from the membrane surface to the washing solution 511 and is removed from the porous membrane.

When the porous membrane 513 is in contact with the falling washing solution 511, the washing solution 511 is not in contact with means for transporting a liquid such as a gutter. In this washing step, when the porous membrane 513 is arranged so as to be in contact with the falling washing solution 511, it is sufficient that a portion, which is arranged such that the washing solution 511 is not in contact with the means for transporting a liquid such as a gutter, be included. In the other portions, when the porous membrane 513 is in contact with the washing solution 511, the washing solution 511 may be in contact with the means for transporting a liquid such as a gutter.

In addition, in the washing step, the porous membrane 513 is transported in the same direction as the falling direction of the washing solution 511.

As a result, the washing solution 511 uniformly and sufficiently contacts with the porous membrane 513. Therefore, the porous membrane 513 is efficiently washed and a material such as a solvent present in the porous membrane 513 is easily removed.

Furthermore, in the washing apparatus 510 illustrated in FIG. 21, the two or more flow paths 512b are arranged in a zigzag shape, the washing solution 511 falls using the movement of the washing solution 511 from one flow path 512b to another flow path 512b, and the direction change for moving the porous membrane 513 from one flow path 512b to another flow path 512b is performed by the pair of upper and lower cylindrical rotors 5141a and 5141a. Therefore, compared with a case where the direction change is performed by one cylindrical rotor under the same tension conditions, the contact angle between the cylindrical rotor 5141 a and the porous membrane 513 is reduced and a force with which the porous membrane 513 is pressed against the cylindrical rotors 5141 a can be reduced, thereby obtaining an effect of suppressing the deformation or collapse of the membrane. In addition, when the flow paths 512b are heated, the temperature of the washing solution 511 can be maintained or increased. Furthermore, the washing property can be increased by providing a protrusion, an obstacle, and the like on an inner wall of the flow paths 512b, disturbing the flow of the washing solution 511 which flows along the porous membrane 513, and breaking the fluid film of the washing solution 511 having a concentration distribution near the porous membrane 513.

In the washing step according to the present invention, a solvent in the porous membrane is mainly removed. However, a part of a hydrophilic polymer is also removed by washing the porous membrane.

<Removal Step>

In the removal step, first, the oxidative decomposition of the hydrophilic polymer is performed using an oxidant and then the hydrophilic polymer in which the molecular weight is reduced is removed.

As a method of reducing the molecular weight, a method of putting a porous membrane in a chemical solution containing an oxidant and then heating the porous membrane containing the chemical solution in the gas phase is preferable.

As the oxidant, ozone, hydrogen peroxide, permanganate, dichromate, persulfate, or the like can be used. However, hypochlorite is particularly preferable from the viewpoint of high oxidizability, superior decomposition ability, superior handleability, and low cost. Examples of hypochlorite include sodium hypochlorite and calcium hypochlorite. In particular, sodium hypochlorite is preferable.

At this time, the temperature of the chemical solution is preferably lower than or equal to 50°C and more preferably lower than or equal to 30°C. When the temperature is higher than 50°C, the oxidative decomposition of the porous membrane is promoted during dipping, a separated hydrophilic polymer is further oxidatively decomposed in the chemical solution, and the oxidant is wasted. On the other hand, when the temperature is too low, the oxidative decomposition is suppressed, but there is a tendency that the cost for controlling the temperature to be low is increased compared to a case of performing this step at normal temperature. Therefore, from these viewpoints, the temperature of the chemical solution is preferably higher than or equal to 0°C and more preferably higher than or equal to 10°C.

After putting the porous membrane in the chemical solution, the porous membrane is heated in the gas phase for the oxidative decomposition of the hydrophilic polymer. The heating in the gas phase is preferable because there is little case where the chemical solution contained in the porous membrane is diluted to a large degree or the chemical solution is separated and eluted to a heating medium; and thus the oxidant in the chemical solution is effectively used for the decomposition of the hydrophilic polymer remaining in the porous membrane.

As a specific heating method, a method of heating the porous membrane using a heated fluid under atmospheric pressure is preferable. It is preferable that a fluid having a high relative humidity be used as the heated fluid, that is, heating be performed under hygrothermal conditions because the drying of the oxidant such as hypochlorite can be prevented and the decomposition treatment can be efficiently performed. At this time, the relative humidity of the fluid is preferably higher than or equal to 80%, more preferably higher than or equal to 90%, and most preferably approximately 100%.

When a continuous treatment is performed, the lower limit of the heating temperature is preferably 50°C and more preferably 80°C because the treatment time can be reduced. The upper limit of the temperature is preferably 100°C under atmospheric pressure.

As a method of removing the hydrophilic polymer in which the molecular weight is reduced, a method of washing the porous membrane is preferable. The washing method is not particularly limited. A method of using the washing apparatus according to the present invention as in the case of the above-described washing step may be used; a method of transporting a porous membrane in a washing tank as illustrated in FIG. 9 may be used; or a method of dipping a porous membrane in a washing solution may be used.

<Washing Step>

In the drying step, the porous membrane which is subjected to the hydrophilic polymer removal step is dried. A method used in the drying step is not particularly limited. The drying step may be performed using a method of introducing the porous membrane into a drying apparatus such as a hot air drier.

As described above, according to the method of producing a porous membrane of the present invention, by transporting the porous membrane so as to contact with the falling washing solution in the washing step, the washing solution flows and falls from the membrane surface while being in contact with the porous membrane. Accordingly, a material such as a solvent in the porous membrane is diffused and transferred from the inside of the membrane to the membrane surface; and the material is further diffused and transferred from the membrane surface to the washing solution and is removed from the porous membrane. In addition, while the washing solution falls, the outermost interface of the washing solution is a free surface. Therefore, the flow rate of the washing solution increases, the porous membrane can be efficiently washed within a short period of time at a low cost, and a material such as a solvent remaining in the porous membrane can be removed.

In the washing step according to the second embodiment of the present invention, the porous membrane moves from a upstream cylindrical rotor to a downstream cylindrical rotor while reciprocating between two or more cylindrical rotors which are alternately arranged, that is, while being sequentially transported between the above-described cylindrical rotors. Therefore, this configuration is preferable for a case where two or more porous membranes are transported and washed (polypyramidal) and can reduce the size of facilities.

Furthermore, since the porous membrane is transported in the same direction as or the opposite direction to the falling direction of the washing solution, the washing solution uniformly and sufficiently contacts with the porous membrane and the porous membrane can be more efficiently washed.

In the washing step according to the third embodiment of the present invention, the porous membrane moves in the axis directions of the cylindrical rotors, of which the axis directions are not parallel, while being transported to reciprocate between the cylindrical rotors. The central axes of the two cylindrical rotors are inclined from a parallel plane by a predetermined angle. Therefore, as described above, since the porous membrane is in contact with each cylindrical rotor at an angle perpendicular to each central axis thereof, the porous membrane can move in the axis direction thereof at regular intervals (pitches) without reciprocating at the same place between the cylindrical rotors. Therefore, it is not necessary that a cylindrical rotor in which a restricting groove is formed be used. In addition, even when cylindrical rotors having a flat circumferential surface are used, a porous membrane can move in the axis direction thereof at regular pitches by transporting the porous membrane to reciprocate between the cylindrical rotors.

In the fourth embodiment of the present invention, since the porous membrane is transported such that the falling direction of the washing solution intersects with the transporting direction of the porous membrane, the washing solution is easily separated from the surface of the porous membrane and thus the washing efficiency is improved.

Furthermore, in the washing step according to the fourth embodiment of the present invention, the porous membrane moves in the axis directions of the pair of cylindrical rotors while being transported to reciprocate between the pair of the cylindrical rotors. Therefore, the size of facilities is reduced, the fresh washing solution can contact with not only a single surface of the porous membrane but also the opposite surface thereof, and thus the washing efficiency is improved.

Furthermore, in the washing step according to the fifth embodiment using the above-described method, the two or more flow paths 512b are arranged in a zigzag shape, the washing solution 511 falls using the movement of the washing solution 511 from one flow path 512b to another flow path 512b, and the direction change for moving the porous membrane 513 from one flow path 512b to another flow path 512b is performed by the pair of upper and lower cylindrical rotors 5141a and 5141a. Therefore, compared with a case where the direction change is performed by one cylindrical rotor under the same tension conditions, the contact angle between the cylindrical rotor 5141a and the porous membrane 513 is reduced and a force with which the porous membrane 513 is pressed against the cylindrical rotors 5141a can be reduced, thereby obtaining an effect of suppressing the deformation or collapse of the membrane. In addition, when the flow paths 512b are heated, the temperature of the washing solution 511 can be maintained or increased. Furthermore, the washing property can be increased by providing a protrusion, an obstacle, and the like on an inner wall of the flow paths 512b, disturbing the flow of the washing solution 511 which flows along the porous membrane 513, and breaking the fluid film of the washing solution 511 having a concentration distribution near the porous membrane 513.

In addition, the washing solution according to the present invention always flows and the washing solution in contact with the surface of the porous membrane is replaced. Therefore, the surface renewal of the porous membrane is actively performed. Therefore, the state in which the elution solvent concentration of the washing solution near the membrane surface is lower than the residual solvent concentration of a solvent which is contained in the porous membrane can be maintained. As a result, the diffusion of the solvent from the membrane surface into the washing solution is promoted and thus washing can be performed within a short period of time.
Furthermore, according to the present invention, large washing facilities are not required.

<Other Embodiments>

The method of producing a porous membrane according to the present invention is not limited to the above-described methods.
For example, in the washing step, using the washing apparatus illustrated in FIG. 12 or 13, the porous membrane may be transported in a direction perpendicular to the falling direction of the washing solution. When the porous membrane 213 is transported in the direction perpendicular to the falling direction of the washing solution 211, the washing solution 211 is easily separated from the porous membrane 213 and thus the washing efficiency is improved by water draining. However, in consideration of the contact between the washing solution and the porous membrane, as illustrated in FIG. 10 or 11, it is preferable that the porous membrane 213 be transported in the same direction as or the opposite direction to the falling direction of the washing solution 211.

In addition, before and/or after the washing step, as illustrated in FIG. 9, the porous membrane may be transported into the washing tank 122, in which the hot water 121 is stored, for washing with hot water. However, in order to sufficiently obtain the effects of the present invention, it is preferable that washing with hot water be performed after the washing step.
Furthermore, between the removal step and the drying step, the pressure of the porous membrane on the outer circumferential side may be reduced. By reducing the pressure of the porous membrane on the outer circumferential side, the pressure on the outer circumferential side is lower than that on the inner circumferential side. Due to this pressure difference, the hydrophilic polymer remaining in the porous membrane moves to the outer circumferential side. Accordingly, the hydrophilic polymer can be more effectively removed when the hydrophilic polymer remains even after the removal step is performed.

In addition, in a method using the washing apparatus 310 illustrated in FIG. 14 or 15, the porous membrane 313 contacts with the washing solution 311 at both times when moving from the first cylindrical rotor 314a to the second cylindrical rotor 314b and when moving from the second cylindrical rotor 314b to the first cylindrical rotor 314a. However, the contact time between the porous membrane 313 and the washing solution 311 is not limited thereto. For example, the porous membrane 313 may contact with the washing solution 311 only when moving from the first cylindrical rotor 314a to the second cylindrical rotor 314b. Conversely, the porous membrane 313 may contact with the washing solution 311 only when moving from the second cylindrical rotor 314b to the first cylindrical rotor 314a.

For example, in the washing step according to the fifth embodiment of the present invention, the porous membrane may be transported in the opposite direction to the transporting direction of the falling washing solution. In this case, due to the transporting rate of the porous membrane and the flow rate of the washing solution, the surface renewal of the porous membrane by the washing solution is further promoted. In addition, as the solvent concentration of a liquid included in the porous membrane is reduced, the solvent concentration of the washing solution to be used is also reduced, which is effective for washing efficiency. Furthermore, a material such as a solvent, which is removed from the porous membrane, can be condensed by the washing solution and can be treated as a high-concentration waste liquid, which is effective from the viewpoint of cost.

[Examples]

Hereinbelow, the present invention will be described in more detail using examples. However, the present invention is not limited thereto.

[Test Examples]

Hereinafter, Test Examples will be described.
The following Test examples 1 to 5 were performed in order to confirm, when a porous membrane is washed to remove a solvent, the washing effects at the time of the surface renewal of the porous membrane and the washing effect depending on the temperature of a washing solution.

<Test Example 1>

(Formation of Porous Membrane)

12 parts by mass of polyvinylidene fluoride A (manufactured by Arkema Inc., trade name: Kynar 301F), 8 parts by mass of polyvinylidene fluoride B (manufactured by Arkema Inc., trade name: Kynar 9000LD), 10 parts by mass of polyvinyl pyrrolidone (manufactured by ISP, trade name: K-90), and 70 parts by mass of N,N-dimethylacetalmide (DMAc) were mixed to prepare a membrane-forming raw material solution (1).

Separately, 3 parts by mass of polyvinylidene fluoride A, 2 parts by mass of polyvinylidene fluoride B, 2 parts by mass of polyvinyl pyrrolidone, and 93 parts by mass of DMAc were mixed to prepare a membrane-forming raw material solution (2).

Next, a nozzle (refer to FIG. 1 of Japanese Unexamined Patent Application First Publication No. 2005-42074), in which a hollow portion was formed in the center and two circular discharge openings were sequentially formed on the outside of the follow portion such that two kinds of solutions were sequentially applied, was prepared. In a state where the temperature is maintained at 30°C, a single woven polyester multifilament braid (multifilament; 830T/96F, 16 stroke) as the reinforcement support was introduced into the hollow portion; the membrane-forming raw material solution (2) and the membrane-forming raw material solution (1) were applied to the outside circumference thereof in order from the inside out; and the resultant was coagulated in a coagulating solution (mixed solution of 5 parts by mass of N,N-dimethylacetamide and 95 parts by mass of water) with the temperature maintained at 80°C. In this way, a porous membrane having a single partition layer in the vicinity of the outermost surface was obtained in which a porous layer having an inclined structure with a larger pore size toward the inside was coated with the braid. Among the applied membrane-forming raw material solutions (1) and (2), the major raw material solution which forms the membrane structure of the porous membrane is the membrane-forming raw material solution (1) applied to the outside.

Furthermore, a nozzle (refer to FIG. 1 of Japanese Unexamined Patent Application First Publication No. 2005-42074), in which a hollow portion having an inner diameter larger than the outer diameter of the porous membrane was formed in the center and two circular discharge openings were sequentially formed on the outside of the hollow portion such that two kinds of solutions were sequentially applied, was prepared. In a state where the temperature is maintained at 30°C, the porous membrane obtained as above was introduced into the hollow portion; glycerin (manufactured by Wako Pure Chemical Industries Ltd., first grade) and the membrane-forming raw material solution (1) were applied to the outside circumference thereof in order from the inside out; and the resultant was coagulated in the above-described coagulating solution with the temperature maintained at 80°C. In this way, a porous membrane having the braid support of a two-layer structure in which the porous layer was further coated was obtained (coagulation step).

At this time, the spinning rate (the transporting rate of the porous membrane) was 8.8 m/min.

Next, the obtained porous membrane was cut into two porous membranes having a length of 50 cm. Regarding one porous membrane, the mass ($W_1$) per unit length of the porous membrane immediately after cutting was measured and was naturally dried until the mass change was not shown at normal temperature (25°C). The mass of the porous membrane in the state where the mass change by natural drying was not shown was measured. As a result, the mass ($W_2$) per unit length of the porous membrane after natural drying was obtained. The mass ($W_3$) of a liquid contained in the porous membrane before the washing treatment was obtained from the mass of the porous membrane after natural drying according to the following expression (II).

$$W_3 = W_1 - W_2 \qquad \ldots \qquad \text{(II)}$$

The other porous membrane immediately after cutting was dipped in 50 mL pure water (at normal temperature) for half a day to diffuse and extract DMAc, remaining in the porous membrane, into pure water (extraction treatment). After the extraction treatment, pure water was collected to measure the concentration of DMAC in pure water according to gas chromatography (GC). For the concentration measurement, the calibration curve was prepared in advance using the known concentration of DMAc.

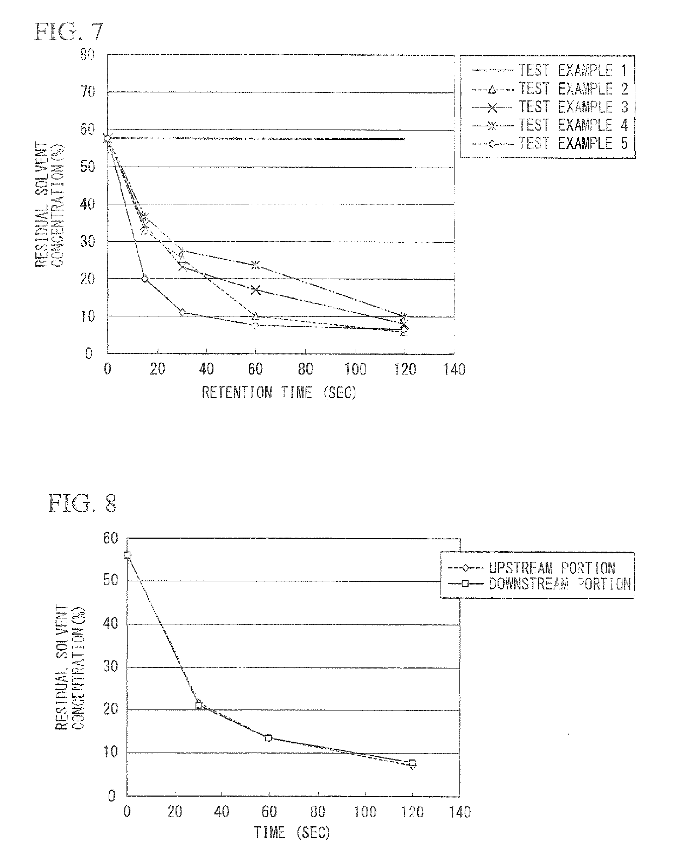

The residual solvent concentration ($C_0$) in the porous membrane before the washing treatment was obtained from a ratio (DMAc concentration/$W_3$) of the measured value of DMAc concentration to the mass ($W_3$) obtained as above. The result thereof is shown in FIG. 7.

<Test Example 2>

The porous membrane after the coagulation step was formed in the same method as that of Test Example 1. Next, the obtained porous membrane was cut into six porous membranes having a length of 50 cm. Using two of them, the mass ($W_1$), the mass ($W_2$), the mass ($W_3$), and the residual solvent concentration ($C_0$) were obtained in the same method as that of Test Example 1. This residual solvent concentration ($C_0$) was set to the residual solvent concentration in the porous membrane before the washing treatment (retention time in the washing solution: 0 seconds).

Next, regarding the other four porous membranes, the washing treatment was performed as follows and the residual solvent concentration in the porous membrane after the washing treatment was obtained.

First, one porous membrane was put into a beaker filled with pure water (1000 mL) as the washing solution and was dipped therein for 15 seconds to perform the washing treatment. During the washing treatment, a hot stirrer was heated so as to maintain the temperature of pure water at 98°C. After the washing treatment, the porous membrane was taken out from the beaker and the mass ($W_1$') per unit length of the porous membrane was measured. The mass ($W_3$') of a liquid contained in the porous membrane after the washing treatment was obtained from the mass ($W_1$') and the mass ($W_2$) per unit length of the porous membrane after natural drying according to the following expression (III).

$$W_3' = W_1' - W_2 \quad \cdots \quad (III)$$

Next, after measuring the mass thereof, the porous membrane after the washing treatment was dipped in 50 mL pure water (at normal temperature) for half a day to diffuse and extract DMAc, remaining in the porous membrane, into pure water (extraction treatment). After the extraction treatment, pure water was collected to measure the concentration of MAc in pure water according to gas chromatography (GC) using the same method as that of Test Example 1. The residual solvent concentration ($C_1$) in the porous membrane after the washing treatment was obtained from a ratio (DMAc concentration/dilution ratio) of the measured value of DMAc concentration to the dilution ratio (calculated from the mass of pure water used in the extraction treatment and the mass ($W_3$') obtained as above).

Regarding the other three porous membranes, the washing treatment was performed in the same method as above and the mass ($W_1$'), the mass ($W_3$'), and the residual solvent concentrations ($C_2$) to ($C_4$) in the porous membranes after the washing treatment were obtained, respectively. In this case, in the respective washing treatments, the retention times (dipping times) of the porous membranes in the beaker were 30 seconds, 60 seconds, and 120 seconds, respectively.

The relationship between the respective retention times and the respective residual solvent concentrations in the porous membranes is illustrated in FIG. 7.

<Test Example 3>

The residual solvent concentration ($C_0$) in the porous membrane before the washing treatment and the residual solvent concentrations ($C_1$) to ($C_4$) in the porous membrane after the washing treatment were obtained in the same methods as those of Test Example 2, except that the temperature of the washing solution was changed to 88°C. The results thereof are shown in FIG. 7.

<Test Example 4>

The residual solvent concentration ($C_0$) in the porous membrane before the washing treatment and the residual solvent concentrations ($C_1$) to ($C_4$) in the porous membrane after the washing treatment were obtained in the same methods as those of Test Example 2, except that the temperature of the washing solution was changed to 78°C. The results thereof are shown in FIG. 7.

<Test Example 5>

The residual solvent concentration ($C_0$) in the porous membrane before the washing treatment and the residual solvent concentrations ($C_1$) to ($C_4$) in the porous membrane after the washing treatment were obtained in the same methods as those of Test Example 2, except that the washing solution was stirred in the washing treatment. The results thereof are shown in FIG. 7.

As clearly seen from FIG. 7, the surface renewal effect of the membrane was significant when the residual solvent concentration in the porous membrane was high.

In addition, when the temperature of the washing solution is high, the superior washing effect was obtained. This effect was significant as the residual solvent concentration in the porous membrane was lower.

In addition, the superior washing effect was obtained when the washing solution was stirred.

It was found from these results that the solvent remaining in the porous membrane can be efficiently removed within a short period of time by replacing (surface renewal) the washing solution in contact with the surface of the porous membrane.

[Example 1]

The porous membrane was formed in the same method as that of Test Example 1.

Next, hot water, heated to 70°C by a heat exchanger, was caused to fall from a height of 1 m under conditions of a flow rate of 2.0 L/min. Then, the porous membrane provided with a weight was put thereinto so as to contact with the water flow to perform the washing treatment.

The porous membranes were respectively subjected to the washing treatment for 30 seconds, 60 seconds, and 120 seconds. Each porous membrane was cut into half to be arranged at an upstream portion and a downstream portion. Using the same method as that of Test Example 2, the residual solvent concentration ($C_0$) in the porous membrane before the washing treatment and the residual solvent concentrations ($C_2$) to ($C_4$) in the porous membrane after the washing treatment were obtained. The results thereof are shown in FIG. 8.

In the following Examples 2 to 4 and Comparative Example I, the apparatus illustrated in FIG. 1 was used for the washing treatment.

The temperature of the washing solution in Examples 2 to 4 was adjusted to 80°C using a heat exchanger and the washing solution, followed by circulation using a pump. In addition, a part of the washing solution was discharged by supplying or adding pure water at 2 L/min.

The measured concentration of the solvent contained in the washing solution was 0.5%.

The washing solution was transported into a storage tank (container). 24 holes having a diameter of 6 mm were formed in the bottom of the storage tank at 10 mm pitches. These holes are formed above a roll folding portion of the porous membrane. The measured circulation flow rate of the washing solution was 27.6 L/min. At this time, the flow rate of the washing solution falling from the holes in the bottom of the storage tank was 1.2 L/min. Therefore, the flow rate of the washing solution flowing along the porous membrane was approximately 0.6 L/min.

The porous membrane was arranged so as to reciprocate between two rolls having an outer diameter of 80 mm 23 times at 10 mm pitches and to contact with the falling washing solution. The distance between the rolls in contact with the falling washing solution was 1150 mm.

The falling rate v0 of the washing solution at a contact start point when the washing solution starts to contact with the porous membrane in the cylindrical rotor 114a; and the falling rate v1 of the washing solution at a separation point when the washing solution is separated from the porous membrane in the cylindrical rotor 114b, were calculated from the record of a high-speed camera, respectively.

[Example 2]

The porous membrane after the coagulation step was formed in the same method as that of Test Example 1. Next, the obtained porous membrane was transported at a rate of 10 m/min and the washing treatment was performed. The porous membrane after the treatment was cut into porous membranes having a length of 50 cm. Using the same method as that of Test Example 1, the mass ($W_1$), the mass ($W_2$), the mass ($W_3$), and the residual solvent concentration ($C_0$) were obtained. This residual solvent concentration ($C_0$) was set to the residual solvent concentration in the porous membrane before the washing treatment (retention time in the washing solution: 0 seconds).

Next, after measuring the mass thereof, the porous membrane after the washing treatment was dipped in 50 mL pure water (at normal temperature) for half a day to diffuse and extract DMAc, remaining in the porous membrane, into pure water (extraction treatment). After the extraction treatment, pure water was collected to measure the concentration of DMAc in pure water according to gas chromatography (GC) using the same method as that of Test Example 1. The residual solvent concentration (C) in the porous membrane after the washing treatment was obtained from a ratio (DMAc concentration/dilution ratio) of the measured value of DMAc concentration to the dilution ratio (calculated from the mass of pure water used in the extraction treatment and the mass ($W_3'$) obtained as above). The result thereof is shown in Table 1. In addition, the retention time was obtained by dividing the total washing length of only the fall portions by the transporting rate of the porous membrane.

[Example 3]

The residual solvent concentration (C) in the porous membrane after the washing treatment was obtained in the same method as that of Example 2, except that the transporting rate was changed to 30 m/min. The result thereof is shown in Table 1.

[Example 4]

The residual solvent concentration (C) in the porous membrane after the washing treatment was obtained in the same method as that of Example 2, except that the transporting rate was changed to 50 m/min. The result thereof is shown in Table 1.

[Comparative Example 1]

The residual solvent concentration (C) in the porous membrane after the washing treatment was obtained in the same method as that of Example 2, except that the transporting rate was changed to 70 m/min. The result thereof is shown in Table 1.

As a result, the solvent could be efficiently removed from the porous membrane within a short period of time due to the surface renewal effect of the membrane until the residual solvent concentration in the porous membrane was approximately 10%. This tendency was the same as in Test Examples 2 to 5.

It can be easily presumed from these results that the solvent can be effectively removed within a short period of time even when the porous membrane is transported so as to contact with the falling washing solution.

[Table 1]

|  | V1 | | v2 | v2/V1 | Residual Solvent Concentration after Washing Treatment |
|---|---|---|---|---|---|
|  | (m/min) | (m/sec) | (m/sec) |  | (%) |
| Example 2 | 10 | 0.167 | 0.84 | 5.03 | 2.7 |
| Example 3 | 30 | 0.5 | 0.84 | 1.68 | 5.6 |
| Example 4 | 50 | 0.83 | 0.84 | 1.01 | 9.1 |
| Comparative Example 1 | 70 | 1.17 | 0.84 | 0.72 | 18.1 |

Industrial Applicability

The washing apparatus and the method of producing a porous membrane according to the present invention are industrially applicable because a material such as a solvent can be efficiently removed from a porous membrane within a short period of time at a low cost without large facilities.

Reference Signs List

| 110 | washing apparatus |
|---|---|
| 111 | washing solution |
| 112 | fall means |
| 112a | storage tank |
| 112b | discharge opening |
| 112c | supply line |
| 113 | porous membrane |
| 114 | transport means |
| 114a to 114n | cylindrical rotor |
| 115 | recovery means |
| 115a | recovery tank |
| 115b | discharge line |

| | |
|---|---|
| 116 | return line |
| 117 | gutter |
| 120 | washing apparatus |
| 121 | hot water |
| 122 | washing bath |
| 123 | porous membrane |
| 210, 220 | washing apparatus |
| 211 | washing solution |
| 212 | fall means |
| 212a | storage tank |
| 212b | discharge opening |
| 212c | supply line |
| 213 | porous membrane |
| 214 | transport means |
| 214a to 214j | cylindrical rotor |
| 215 | recovery means |
| 215a | recovery tank |
| 215b | discharge line |
| 216 | return line |
| 310 | washing apparatus |
| 311 | washing solution |
| 312 | fall means |
| 312a | storage tank |
| 312b | discharge opening |
| 312c | supply line |
| 313 | porous membrane |
| 314 | transport means |
| 314a, 314b | cylindrical rotor |
| 315 | recovery means |

| 315a | recovery tank |
| 315b | discharge line |
| 316 | return line |
| 410, 420 | washing apparatus |
| 411 | washing solution |
| 412 | fall means |
| 412a | storage tank |
| 412b | discharge opening |
| 412c | supply line |
| 413 | porous membrane |
| 414 | transport means |
| 414a | cylindrical rotor |
| 415 | recovery means |
| 415a | recovery tank |
| 415b | discharge line |
| 416 | return line |
| 430 | washing apparatus |
| 510 | washing apparatus |
| 511 | washing solution |
| 512 | fall means |
| 512a | storage tank |
| 512b | flow path |
| 512c | first supply line |
| 512d | second supply line |
| 513 | porous membrane |
| 514 | transport means |
| 514a | guide member |
| 515 | transport means |
| 515a | recovery tank |

515b        discharge line

516        return line

F        fall portion

**Claims**

1.  A method of producing a porous membrane comprising:

    a coagulation step of coagulating a membrane-forming raw material solution, which comprises a hydrophobic polymer, a hydrophilic polymer, and a solvent, in a coagulating solution to form a porous membrane;
    a washing step of washing the porous membrane to remove material remaining in the porous membrane;
    a removal step of removing a hydrophilic polymer remaining in the porous membrane; and
    a drying step of drying the porous membrane,
    wherein the washing step comprises transporting the porous membrane so as to contact with a falling washing solution.

2.  The method of producing a porous membrane according to Claim 1,
    wherein the washing step comprises transporting the porous membrane parallel to a falling direction of the washing solution.

3.  The method of producing a porous membrane according to Claim 1 or 2,
    wherein the washing step comprises transporting the porous membrane so as to contact with the washing solution at a high angle.

4.  The method of producing a porous membrane according to any one of Claims 1 to 3,
    wherein in the washing step, a fall of the washing solution is a free fall.

5.  The method of producing a porous membrane according to any one of Claims 1 to 4,
    wherein the washing step comprises transporting the porous membrane in the same direction as or the opposite direction to the falling direction of the washing solution, and
    in the washing step, when a transporting rate of the porous membrane is represented by V1 and an average movement rate of the washing solution is represented by v2, v2/V1 is higher than or equal to 1.

6.  The method of producing a porous membrane according to any one of Claims 1 to 4,
    wherein the washing step comprises transporting the porous membrane in the same direction as the falling direction of the washing solution, and
    in the washing step, when a transporting rate of the porous membrane is represented by V1 and an average movement rate of the washing solution is represented by v2, v2/V1 is higher than or equal to 2.

7.  The method of producing a porous membrane according to any one of Claims 1 to 4,
    wherein the washing step comprises transporting the porous membrane in the opposite direction to the falling direction of the washing solution.

8.  The method of producing a porous membrane according to any one of Claims 1 to 7,
    wherein the washing step comprises moving the porous membrane in axis directions of a pair of cylindrical rotors while reciprocating the porous membrane between the pair of cylindrical rotors.

9.  The method of producing a porous membrane according to Claim I or any one of Claims 3 to 7,
    wherein the washing step comprises transporting a porous membrane so as to contact with the falling washing solution and moving the porous membrane from an upstream cylindrical rotor to a downstream cylindrical rotor while reciprocating the porous membrane between two or more cylindrical rotors which are alternately arranged.

10. The method of producing a porous membrane according to Claim 9,
    wherein the washing step comprises transporting the porous membrane parallel to a falling direction of the washing solution.

**11.** The method of producing a porous membrane according to Claim 9,
wherein the washing step comprises transporting the porous membrane perpendicular to a falling direction of the washing solution.

**12.** The method of producing a porous membrane according to any one of Claims 1 to 7,
wherein the washing step comprises transporting the porous membrane in a same direction as or an opposite direction to a falling direction of the washing solution, so as to contact with the falling washing solution and moving the porous membrane in axis directions of a pair of cylindrical rotors, of which axis directions are not parallel to each other, while transporting the porous membrane to reciprocate between the pair of cylindrical rotors.

**13.** The method of producing a porous membrane according to any one of Claims 1 to 7,
wherein the washing step includes transporting a porous membrane so as to contact with a falling washing solution and such that a falling direction of a washing solution intersects with a transporting direction of the porous membrane and moving the porous membrane in axis directions of a pair of cylindrical rotors while transporting the porous membrane to reciprocate between the pair of cylindrical rotors.

**14.** The method of producing a porous membrane according to any one of Claims 1 to 7,
wherein the washing step comprises transporting the porous membrane in a same direction as or an opposite direction to a falling direction of the washing solution using a guide member, which is provided at a fall portion of the washing solution and restricts the transporting of the porous membrane, such that the porous membrane contacts with the washing solution falling from an end of a flow path through which the washing solution flows.

**15.** The method of producing a porous membrane according to Claim 14,
wherein the washing step comprises transporting the porous membrane in a same direction as or an opposite direction to a falling direction of the washing solution using transport means, which is provided at fall portions of the washing solution, such that the porous membrane contacts with the washing solution sequentially moving from one to another of two or more flow paths through which a water solution flows.

**16.** The method of producing a porous membrane according to Claim 15,
wherein the two or more flow paths are arranged in a zigzag shape.

**17.** A washing apparatus that washes a porous membrane, obtained by coagulating a membrane-forming raw material solution comprising a hydrophobic polymer, a hydrophilic polymer, and a solvent in a coagulating solution, to remove material remaining in the porous membrane, the washing apparatus comprising:

fall means for causing a washing solution to fall; and
transport means for transporting a porous membrane so as to contact with a falling washing solution.

**18.** The washing apparatus according to Claim 17,
wherein the transport means is for transporting the porous membrane parallel to a falling direction of the washing solution.

**19.** The washing apparatus according to Claim 17 or 18,
wherein the transport means comprises a pair of cylindrical rotors and is means for moving the porous membrane in axis directions of the pair of cylindrical rotors while reciprocating the porous membrane between the pair of cylindrical rotors.

**20.** The washing apparatus according to Claim 17,
wherein the transport means comprises two or more cylindrical rotors, which are alternately arranged, and is means for moving a porous membrane from an upstream cylindrical rotor to a downstream cylindrical rotor while reciprocating the porous membrane between the cylindrical rotors.

**21.** The washing apparatus according to Claim 20,
wherein the transport means is for transporting the porous membrane parallel to a falling direction of the washing solution.

**22.** The washing apparatus according to Claim 20,
wherein the transport means is for transporting the porous membrane perpendicular to a falling direction of the washing solution.

**23.** The washing apparatus according to Claim 17,
wherein the transport means is transport means for transporting a porous membrane in a same direction as or an opposite direction to a falling direction of the washing solution, and
the transport means comprises a pair of cylindrical rotors, of which axis directions are not parallel to each other, and is means for moving the porous membrane in axis directions of the pair of cylindrical rotors while transporting the porous membrane to reciprocate between the pair of cylindrical rotors.

**24.** The washing apparatus according to Claim 17,
wherein the transport means is transport means for transporting the porous membrane so as to contact with fall means for causing the washing solution to fall and with the falling washing solution and such that a falling direction of the washing solution intersects with a transporting direction of the porous membrane, and
the transport means comprises a pair of cylindrical rotors and is means for moving a porous membrane in axis directions of the pair of cylindrical rotors while transporting the porous membrane to reciprocate between the pair of cylindrical rotors.

**25.** The washing apparatus according to Claim 17,
wherein the transport means is transport means for transporting the porous membrane parallel to a falling direction of the washing solution,
the fall means comprises a flow path through which the washing solution flows and which is obliquely arranged such that a washing solution falls from an end thereof, and
the transport means comprises a guide member, which restricts the transporting of the porous membrane, at a fall portion to which the washing solution falls from the flow path.

**26.** The washing apparatus according to Claim 25,
wherein the fall means comprises two or more flow paths.

**27.** The washing apparatus according to Claim 26,
wherein the two or more flow paths are arranged in a zigzag shape such that the washing solution sequentially falls and moves from one flow path to another flow path.

FIG. 1

FIG. 2

## FIG. 3A

## FIG. 3B

FIG. 4

FIG. 5A

FIG. 5B

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

FIG. 19A

FIG. 19B

FIG. 20A

FIG. 20B

FIG. 21

FIG. 22

FIG. 23A

513

5141a

5141a

5141a

FIG. 23B

513

5141a

5141a

5141a

5141a

FIG. 24A

5142a

513

5142a

FIG. 24B

513

5143a

5143a

FIG. 24C

513

5144a

FIG. 25

<table>
<tr><td colspan="3" align="center">**INTERNATIONAL SEARCH REPORT**</td><td>International application No.<br>PCT/JP2011/075009</td></tr>
</table>

**A. CLASSIFICATION OF SUBJECT MATTER**
*B01D67/00*(2006.01)i

According to International Patent Classification (IPC) or to both national classification and IPC

**B. FIELDS SEARCHED**

Minimum documentation searched (classification system followed by classification symbols)
B01D67/00

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 51-80686 A (Asahi Chemical Industry Co., Ltd.),<br>14 July 1976 (14.07.1976),<br>page 2, lower right column, line 2 to page 3, upper right column, line 6; fig. 1<br>(Family: none) | 1-8,17-19<br>14-16,25-27 |
| X<br>Y | JP 54-151573 A (Nippon Zeon Co., Ltd.),<br>28 November 1979 (28.11.1979),<br>page 6, lower right column, line 18 to page 7, upper right column, line 8; fig. 1<br>(Family: none) | 1-8,17-19<br>14-16,25-27 |
| X<br>Y | JP 7-313854 A (Terumo Corp.),<br>05 December 1995 (05.12.1995),<br>entire text; all drawings<br>(Family: none) | 1-8,17-19<br>14-16,25-27 |

☒ Further documents are listed in the continuation of Box C.    ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>13 January, 2012 (13.01.12) | Date of mailing of the international search report<br>24 January, 2012 (24.01.12) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2011/075009 |

C (Continuation). DOCUMENTS CONSIDERED TO BE RELEVANT

| Category* | Citation of document, with indication, where appropriate, of the relevant passages | Relevant to claim No. |
| --- | --- | --- |
| X | JP 2008-237987 A (Toyobo Co., Ltd.), 09 October 2008 (09.10.2008), | 1-8,14-19, 25-27 |
| A | entire text; all drawings (Family: none) | 9-13,20-24 |

Form PCT/ISA/210 (continuation of second sheet) (July 2009)

**EP 2 633 900 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010243853 A
- JP 2011076244 A
- JP 2011153646 A
- JP 2011170999 A
- JP 2011176720 A
- JP 2008237987 A
- JP 2005042074 A